(19) Europäisches Patentamt
European Patent Office
Office européen des brevets

(11) EP 3 898 748 B1

(12) # FASCICULE DE BREVET EUROPEEN

(45) Date de publication et mention de la délivrance du brevet:
**01.04.2026 Bulletin 2026/14**

(21) Numéro de dépôt: **19842383.2**

(22) Date de dépôt: **04.12.2019**

(51) Classification Internationale des Brevets (IPC):
***C08G 18/48*** (2006.01) ***C08G 18/71*** (2006.01)
***C08G 65/336*** (2006.01) ***C08K 5/549*** (2006.01)
***C09J 7/38*** (2018.01) ***C09J 171/00*** (2006.01)
***C09J 171/02*** (2006.01) ***C09J 175/08*** (2006.01)
***C08G 18/28*** (2006.01) ***C08G 18/42*** (2006.01)
***C08G 18/62*** (2006.01) ***C08G 18/69*** (2006.01)
***C08G 18/76*** (2006.01) ***C08G 18/44*** (2006.01)
***C08G 18/61*** (2006.01) ***C08G 18/73*** (2006.01)
***C08G 18/75*** (2006.01) ***C09J 175/04*** (2006.01)
***C09J 201/10*** (2006.01) ***G09F 3/10*** (2006.01)

(52) Classification Coopérative des Brevets (CPC):
(C-Sets disponibles)
**C09J 171/02; C08G 18/289; C08G 18/42; C08G 18/4238; C08G 18/4277; C08G 18/44; C08G 18/48; C08G 18/4825; C08G 18/4829; C08G 18/61; C08G 18/622; C08G 18/69; C08G 18/718; C08G 18/73; C08G 18/755;** (Cont.)

(86) Numéro de dépôt international:
**PCT/FR2019/052917**

(87) Numéro de publication internationale:
**WO 2020/128200 (25.06.2020 Gazette 2020/26)**

(54) **NOUVELLES COMPOSITIONS RETICULABLES PAR CHAUFFAGE ET ARTICLES AUTO-ADHESIFS CORRESPONDANTS**

NEUARTIGE HITZEHÄRTBAREN ZUSAMMENSETZUNGEN UND HAFTKLEBARTIKEL DAVON

NOVEL HEAT-CURABLE COMPOSITIONS AND SELF-ADHESIVE ARTICLES THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2018 FR 1873630**

(43) Date de publication de la demande:
**27.10.2021 Bulletin 2021/43**

(73) Titulaire: **Bostik SA**
**92800 Puteaux (FR)**

(72) Inventeurs:
- **GARNIER, Claire**
  **60280 Venette (FR)**
- **LAFERTE, Olivier**
  **60280 Venette (FR)**

(74) Mandataire: **Arkema Patent**
**Arkema France**
**DRD-DPI**
**51, Esplanade du Général de Gaulle**
**CS 10478**
**92907 Paris La Défense Cedex (FR)**

(56) Documents cités:
**EP-A1- 2 336 208**
**WO-A1-2018/215463**
**WO-A2-2009/106699**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)**C08G 18/758; C08G 18/7621; C08G 18/7642; C08G 18/7671; C08G 65/336; C09J 7/38; C09J 171/00; C09J 175/04; C09J 201/10;** C08G 2170/40; C09J 2203/334; C09J 2471/00

C-Sets
**C08K 5/549, C08L 101/10, C09J 171/00;**
**C09J 171/00, C08K 5/549, C08L 101/10;**
**C09J 175/04, C08L 83/04, C08K 5/01;**
**C09J 201/10, C08K 5/549**

## Description

La présente invention a pour objet une nouvelle composition adhésive réticulable par chauffage, à base d'un polymère comprenant au moins un groupe alkoxysilane hydrolysable. Elle concerne également un article auto-adhésif, notamment un support auto-adhésif qui comprend une couche support revêtue d'une couche auto-adhésive constituée de ladite composition à l'état réticulé. Elle concerne enfin un procédé de fabrication dudit article.

Les adhésifs sensibles à la pression (également dénommés colles auto-adhésives ou encore, en anglais, "Pressure Sensitive Adhesives" ou PSA) sont des substances qui confèrent à la couche support qui en est revêtue un pouvoir collant immédiat à température ambiante. Souvent désigné par le terme anglais de "tack" ou encore parfois par le terme de "pégosité", ce pouvoir collant immédiat permet l'adhésion instantanée dudit support auto-adhésif à toutes sortes de substrats, sous l'effet d'une pression légère et brève. En raison de son pouvoir adhésif, habituellement évalué par un test de pelage (ou peel, en anglais), ledit support auto-adhésif est alors fermement fixé audit substrat, au moyen d'un joint adhésif.

Les PSA sont largement utilisés pour la fabrication d'articles auto-adhésifs, tels que par exemple d'étiquettes auto-adhésives qui sont fixées sur des articles à des fins de présentation d'informations (telles que code barre, dénomination, prix) et/ou à des fins décoratives, que ce soit lors de collages permanents ou temporaires.

Les PSA sont également mis en œuvre pour la fabrication de rubans auto-adhésifs d'utilisations variées. On peut citer par exemple, outre le ruban adhésif transparent largement utilisé dans la vie quotidienne : la mise en forme et l'assemblage d'emballages en carton ; la protection de surfaces pour les travaux de peinture, dans la construction ; la fixation et le maintien d'éléments divers tels que panneaux, briques, objets protubérants, dans la construction de bâtiments ou d'édifices ; la fixation et le maintien de parties métalliques ou plastiques ou en verre, plates ou ayant des profils spécifiques, tels des câbles électriques, des films plastiques, des vitres, des tôles, des inscriptions, des logos, des parties de sièges, des tableaux de bord, des parois plastiques ou textiles, des conduits ou des tuyaux de circulation de fluides, notamment dans l'industrie des transports ; le collage des moquettes par rubans adhésifs à double face dans le domaine du bâtiment.

En vue de la fabrication d'articles auto-adhésifs (par exemple d'étiquettes et/ou rubans auto-adhésifs), les PSA sont généralement appliqués par des procédés d'enduction en continu sur la totalité de la surface d'une couche support (le cas échéant imprimable) de grandes dimensions, à raison d'une quantité (généralement exprimée en $g/m^2$) et désignée ci-après par le terme de "grammage". La couche support est par exemple du papier ou un film constitué d'un matériau polymère à une ou plusieurs couches. La couche de composition auto-adhésive qui recouvre la couche support peut être elle-même recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur l'article à revêtir soit manuellement, soit à l'aide d'étiqueteuses sur des chaînes automatisées de conditionnement.

Ces systèmes multicouches peuvent être également transformés en rubans auto-adhésifs par découpe et conditionnement en rouleaux de largeurs et de longueurs déterminées avec découpe ou pré-découpe de formes particulières utiles à leur utilisation finale, comme par exemple pour l'assemblage de pièces de taille variable et de forme variable, dans l'industrie de l'électronique, que ce soit pour des applications dans l'industrie ou par le grand public.

On connaît déjà, notamment par les demandes WO 09/106699 et EP2336208, des compositions adhésives réticulables par chauffage, à base de polyuréthane (ou polyéther) à terminaison alkoxysilanes hydrolysables, dont l'enduction sur un support et le chauffage conduit, au terme d'une réaction chimique de réticulation mise en œuvre en présence d'humidité, à l'obtention d'un support auto-adhésif qui présente les propriétés requises de pouvoir adhésif (ou peel) et de tack. Cette réaction de réticulation conduit à la formation d'un joint adhésif qui possède une structure de réseau polymérique tridimensionnel comprenant des liaisons siloxane et qui assure la fixation du support auto-adhésif sur le substrat. Ledit support auto-adhésif peut ainsi être utilisé pour la fabrication d'étiquettes et/ou de rubans auto-adhésifs.

En raison du grand nombre des usages actuels ou potentiels des articles auto-adhésifs, notamment des étiquettes et des rubans auto-adhésifs, il est toutefois souhaitable d'améliorer les propriétés des supports auto-adhésifs divulgués par les 2 demandes précitées, et notamment leur pouvoir adhésif et leur tack.

L'amélioration de ces propriétés est également très attendue dans le domaine des rubans auto-adhésifs à haut grammage qui sont susceptibles d'être utilisés dans le domaine de la construction, par exemple pour le collage de double ou triple vitrage dans un chassis de fenêtre en aluminium. En effet, pour une telle application, il est important que le joint adhésif, qui assure l'assemblage du panneau rigide constitué du double ou triple vitrage avec le chassis de la fenêtre,

présente des propriétés élastomériques améliorées, notamment d'élongation et la résistance à la rupture, afin de conserver toute son efficacité, face aux sollicitations mécaniques et aux variations de température observées pendant la durée de vie de la fenêtre.

Il est donc également souhaitable de pouvoir disposer d'articles auto-adhésifs, et notamment de supports auto-adhésifs, qui soient susceptibles d'être obtenus par réticulation de compositions adhésives à base d'un polymère à groupe alkoxysilane hydrolysable, et dont l'élongation et la résistance à la rupture soient augmentées.

Par ailleurs, le temps de réticulation nécessaire à l'obtention d'un support auto-adhésif présentant les propriétés avantageuses de pouvoir adhésif et de tack est un paramètre particulièrement important sur le plan de la production industrielle desdits supports auto-adhésifs. Il détermine en effet le dimensionnement du four nécessaire au chauffage, ainsi que le temps de séjour correspondant de la couche support enduite, ou encore la consommation énergétique, et donc la productivité du procédé dans son ensemble. Il est donc également souhaitable de diminuer ledit temps de réticulation afin d'augmenter la productivité dudit procédé.

La présente invention a donc pour but de proposer un article auto-adhésif, notamment un support auto-adhésif, qui présente, sur différents substrats, un pouvoir adhésif et/ou un tack améliorés.

Un autre but de la présente invention est de proposer un article auto-adhésif, notamment un support auto-adhésif, tel que l'élongation et la résistance à la rupture du joint adhésif formé après fixation dudit article sur le substrat soient augmentées.

Un autre but de la présente invention est de satisfaire aux buts précédents pour un article auto-adhésif, notamment un support auto-adhésif, à haut grammage, typiquement supérieur à 100 g/m$^2$, de préférence supérieur à 450 g/m$^2$.

Un autre but de la présente invention est de satisfaire aux buts précédents tout en diminuant le temps de réticulation nécessaire à la production industrielle dudit support auto-adhésif.

Il a à présent été trouvé que ces buts peuvent être atteints en totalité ou en partie au moyen de la composition adhésive et de l'article auto-adhésif qui sont décrits ci-après.

La présente invention a donc pour objet en premier lieu une composition adhésive réticulable par chauffage, caractérisée en ce qu'elle comprend :

- au moins un polymère (A) comprenant un groupe alkoxysilane hydrolysable ;
- au moins une résine tackifiante (B) ;
- au moins une résine silsesquioxane (C) ; et
- au moins un catalyseur de réticulation (D).

__Polymère (A) :__

Au sens de la présente invention, on entend par polymère (A) comprenant un groupement alkoxysilane hydrolysable, un polymère qui comprend au moins un, et de préférence au moins deux, groupements hydrolysables de formule (I) :

$$-Si(R^4)_p(OR^5)_{3-p} \qquad (I)$$

dans laquelle :

- $R^4$ représente un radical alkyl linéaire ou ramifié comprenant de 1 à 4 atomes de carbone, avec la possibilité que quand il y a plusieurs radicaux $R^4$, ces derniers soient identiques ou différents ;
- $R^5$ représente un radical alkyl linéaire ou ramifié comprenant de 1 à 4 atomes de carbone, avec la possibilité que quand il y a plusieurs radicaux $R^5$, ces derniers soient identiques ou différents, avec la possibilité que deux groupements $OR^5$ puissent être engagés dans un même cycle ; et
- p est un nombre entier égal à 0, 1 ou 2, de préférence égal à 0 ou 1.

Le groupement alkoxysilane hydrolysable est de préférence positionné en terminaison dudit polymère. Un positionnement en milieu de chaîne n'est toutefois pas exclu. Le polymère (A) n'est pas réticulé avant l'application de la composition adhésive. La composition adhésive est appliquée dans des conditions permettant sa réticulation.

Le polymère (A) est donc un polymère silylé qui se présente généralement sous forme de liquide plus ou moins visqueux. De préférence, le polymère (A) présente une viscosité allant de 10 à 200 Pa.s, de préférence allant de 20 à 175 Pa.s, ladite viscosité étant par exemple mesurée selon une méthode de type Brookfield à 23°C et 50% d'humidité relative (aiguille S28). Plus généralement, les viscosités qui sont indiquées dans le présent texte sont, en l'absence de mentions contraires, des viscosités Brookfield.

Le polymère (A) comprend de préférence deux groupements de formule (I), mais il peut également comprendre

de trois à six groupements de formule (I).

De préférence, le ou les polymères (A) présentent une masse molaire moyenne allant de 500 à 50000 g/mol, de préférence encore allant de 700 à 20000 g/mol. La masse molaire des polymères et des divers ingrédients de la composition adhésive selon l'invention peut être mesurée par des méthodes bien connues de l'homme du métier, par exemple par RMN et chromatographie d'exclusion stérique en utilisant des étalons de polystyrène.

Selon un mode de réalisation de l'invention, le polymère (A) répond à l'une des formules (II), (III) ou (IV) :

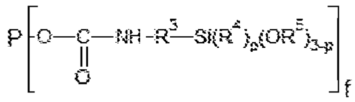

(II)

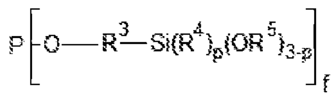

(III)

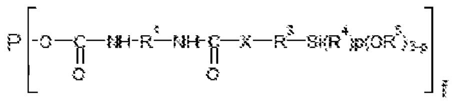

(IV)

dans lesquelles :

- $R^4$, $R^5$ et p ont la même signification que dans la formule (I) décrite ci-dessus,
- P représente un radical polymérique saturé ou insaturé, linéaire ou ramifié comprenant éventuellement un ou plusieurs hétéroatomes, tels que oxygène, azote, soufre, silicium, et présentant de préférence une masse molaire en nombre allant de 100 g/mol à 48600 g/mol, plus particulièrement de 300 g/mol à 18600 g/mol ou encore de 500 g/mol à 12600 g/mol,
- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone, de préférence de 1 à 3 atomes de carbone,
- X représente un radical divalent choisi parmi -NH-, -$NR^7$- ou -S-,
- $R^7$ représente un radical alkyl linéaire ou ramifié comprenant de 1 à 20 atomes de carbone et pouvant également comprendre un ou plusieurs hétéroatomes, et
- f est un entier allant de 1 à 6, de préférence allant de 2 à 5, de préférence de 2 à 4, de préférence encore allant de 2 à 3.

De préférence, dans les formules (II), (III) et/ou (IV) ci-dessus, P représente un radical polymérique choisi de manière non limitative parmi les polyéthers, polycarbonates, polyesters, polyoléfines, polyacrylates, polyéther polyuréthanes, polyester polyuréthanes, polyoléfine polyuréthanes, polyacrylate polyuréthanes, polycarbonate polyuréthanes, polyéther/polyester polyuréthanes à blocs.

Par exemple, le document EP 2468783 décrit des polymères silylés de formule (II) dans lesquels P représente un radical polymérique à blocs polyuréthane/polyester/polyéther.

Selon un mode de réalisation, les polymères silylés sont choisis parmi les polyuréthanes silylés, les polyéthers silylés, et leurs mélanges.

Selon un mode de réalisation particulier, le polymère silylé (A) répond à l'une des formules (II'), (III') ou (IV') :

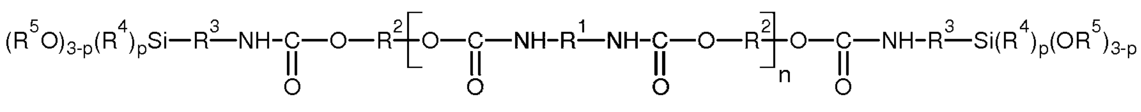

(II')

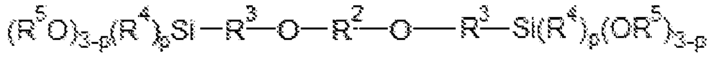

(III')

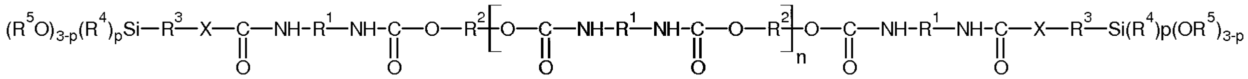

(IV')

dans lesquelles :

- $R^1$, $R^3$, $R^4$, $R^5$, X, $R^7$ et p ont la même signification que dans les formules (II), (III) et (IV) décrites ci-dessus,
- $R^2$ représente un radical divalent hydrocarboné saturé ou insaturé, linéaire ou ramifié comprenant éventuellement un ou plusieurs hétéroatomes, tels que oxygène, azote, soufre, silicium, et présentant de préférence une masse molaire en nombre allant de 100 g/mol à 48600 g/mol, plus particulièrement de 300 g/mol à 18600 g/mol ou encore de 500 g/mol à 12600 g/mol, et
- n est un entier supérieur ou égal à 0.

Dans les polymères silylés de formules (II'), (III') ou (IV') définies ci-dessus, lorsque le radical $R^2$ comprend un ou des hétéroatomes, ledit ou lesdits hétéroatomes ne sont pas présents en bout de chaîne. Autrement dit, les valences libres du radical divalent $R^2$ liées aux atomes d'oxygène voisin du polymère silylé, proviennent chacune d'un atome de carbone. Ainsi, la chaine principale du radical $R^2$ est terminée par un atome de carbone à chacune des deux extrémités, ledit atome de carbone présentant alors une valence libre.

Selon un mode de réalisation, les polymères silylés (A) sont obtenus à partir de polyols choisis parmi les polyéthers polyols, les polyesters polyols, les polycarbonates polyols, les polyacrylates polyols, les polysiloxanes polyols et les polyoléfines polyols et leurs mélanges, et de préférence encore à partir de diols choisis parmi les polyéthers diols, les polyesters diols, les polycarbonates diols, les polyacrylates diols, les polysiloxanes diols, les polyoléfines diols et leurs mélanges. Dans le cas des polymères de formules (II'), (III') ou (IV') décrites ci-dessus, de tels diols peuvent être représentés par la formule HO-$R^2$-OH où $R^2$ a la même signification que dans les formules (II'), (III') ou (IV').

Par exemple, parmi les radicaux de type $R^2$ qui peuvent être présents dans les formules (II'), (III') ou (IV'), on peut citer les radicaux divalents suivants dont les formules ci-dessous font apparaître les 2 valences libres :

- dérivé d'un polypropylène glycol :

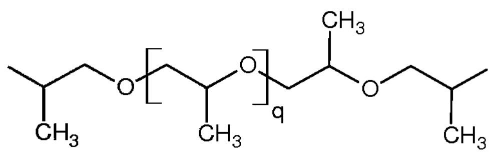

- dérivé d'un polyester diol :

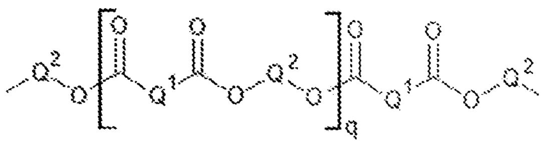

- dérivé d'un polybutadiène diol :

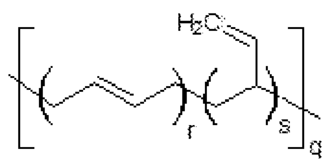

- dérivé d'un polyacrylate diol :

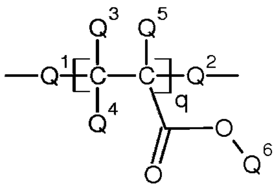

- dérivé d'un polysiloxane diol :

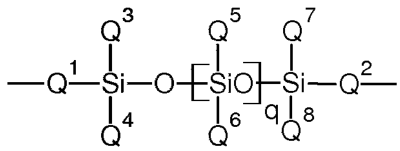

Dans les formules ci-dessus, la signification des radicaux et indices est la suivante :

- q représente un entier tel que la masse moléculaire en nombre du radical $R^2$ va de 100 g/mol à 48600 g/mol, de préférence de 300 g/mol à 18600 g/mol, de préférence encore de 500 g/mol à 12600 g/mol,
- r et s représentent zéro ou un entier non nul tel que la masse moléculaire en nombre du radical $R^2$ va de 100 g/mol à 48600 g/mol, de préférence de 300 g/mol à 18600 g/mol, de préférence encore de 500 g/mol à 12600 g/mol, étant entendu que la somme r+s est différente de zéro,
- $Q^1$ représente un radical alkylène divalent aromatique ou aliphatique linéaire ou ramifié, saturé ou insaturé, présentant de préférence de 1 à 18 atomes de carbone, de préférence encore de 1 à 8 atomes de carbone,
- $Q^2$ représente un radical alkylène divalent linéaire ou ramifié présentant de préférence de 2 à 36 atomes de carbone, de préférence encore de 1 à 8 atomes de carbone,
- $Q^3$, $Q^4$, $Q^5$, $Q^6$, $Q^7$ et $Q^8$, représentent, indépendamment les uns des autres, un atome d'hydrogène ou un radical alkyle, alkényle ou aromatique, présentant de préférence de 1 à 12 atomes de carbone, de préférence de 2 à 12 atomes de carbone, de préférence encore de 2 à 8 atomes de carbone.

Selon mode de réalisation de la composition selon l'invention, le polymère silylé (A) est tel que le radical $R^2$ qui apparaît dans les formules (II'), (III') et (IV') représente un radical polyéther, de préférence un radical poly(oxyalkylène), et de manière encore plus préférée un radical dérivé d'un polypropylène glycol répondant à la formule indiquée plus haut.

Selon un mode de réalisation, $R^1$ est choisi parmi l'un des radicaux divalents suivants dont les formules ci-dessous font apparaître les 2 valences libres :

a) le radical divalent dérivé de l'isophorone diisocyanate (IPDI) :

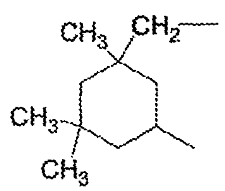

b) le radical divalent dérivé du dicyclohexylmethane diisocyanate (H12MDI)

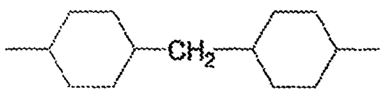

c) le radical divalent dérivé du toluène diisocyanate (TDI)

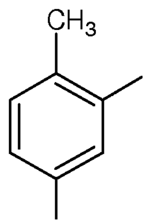
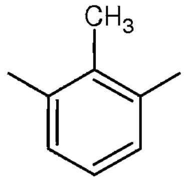

d) les radicaux divalents dérivés des isomères 4,4' et 2,4'- du diphénylmethane diisocyanate (MDI)

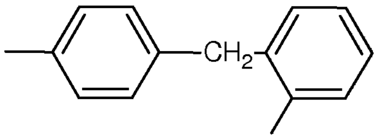
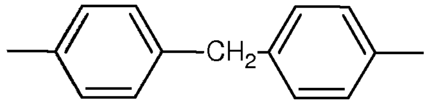

e) le radical divalent dérivé de l'hexaméthylène diisocyanate (HDI) $-(CH_2)_6-$

f) le radical divalent dérivé du m-xylylène diisocyanate (m-XDI)

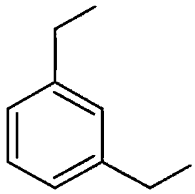

Les polymères de formule (II) ou (II') peuvent être obtenus selon un procédé décrit dans les documents EP 2336208 et WO 2009/106699. L'homme du métier saura adapter le procédé de fabrication décrit dans ces deux documents dans le cas de l'utilisation de différents types de polyols. Parmi les polymères répondant à la formule (II), on peut citer :

- GENIOSIL® STP-E10 (disponible auprès de WACKER) : polyéther comprenant deux groupements (I) de type diméthoxy (n égal à 0, p égal à 1 et $R^4$ et $R^5$ représentent un groupement méthyle) présentant une masse molaire moyenne en nombre de 8889 g/mol où $R^3$ représente un groupement méthyle;
- GENIOSIL® STP-E30 (disponible auprès de WACKER): de masse molaire moyenne en nombre de 14493 g/mol, il s'agit d'un polypropylène glycol avec 2 groupes terminaux constitués d'un diméthoxy(méthyl)silylméthylcarbamate, soit dans la formule (II') : n égal à 0 ; p égal à 1 ; $R^4$ et $R^5$ représentent un groupement méthyle et $R^3$ représente un groupement méthyle ;
- SPUR+® 1050MM (disponible auprès de MOMENTIVE) : polyuréthane comprenant deux groupements (I) de type triméthoxy (n différent de 0, p égal à 0 et $R^5$ représente un groupement méthyle) présentant une masse molaire moyenne en nombre de 16393 g/mol où $R^3$ représente un groupement n-propyle ;
- SPUR+® Y-19116 (disponible auprès de MOMENTIVE) : polyuréthane comprenant deux groupements (I) de type triméthoxy (n différent de 0 et $R^5$ représente un groupement méthyle) présentant une masse molaire moyenne en nombre allant de 15000 à 17000 g/mol g/mol où $R^3$ représente un groupement n-propyle ;
- DESMOSEAL® S XP 2636 (disponible auprès de BAYER) : polyuréthane comprenant deux groupements (I) de type triméthoxy (n différent de 0, p égal à 0 et $R^5$ représente un groupement méthyle) présentant une masse molaire moyenne en nombre de 15038 g/mol où $R^3$ représente un groupement n-propylène.

Les polymères de formule (III) ou (III') peuvent être obtenus par hydrosilylation de polyéther diallyléther selon un procédé décrit par exemple dans le document EP 1829928. Parmi les polymères répondant à la formule (III), on peut citer :

- le polymère MS SAX® 350 (disponible auprès de KANEKA) correspondant à un polyéther comprenant deux groupements (I) de type diméthoxy (p égal à 1 et $R^4$ et $R^5$ représentent un groupement méthyle) ayant une masse molaire moyenne en nombre allant de 14000 à 16000 g/mole ;
- le polymère MS SAX® 260 (disponible auprès de KANEKA) correspondant à un polyéther comprenant deux groupements (I) de type diméthoxy (p égal à 1, $R^4$ et $R^5$ représentent un groupement méthyle) présentant une

masse molaire moyenne en nombre de 16000 à 18000 g/mol où $R^3$ représente un groupement éthyle ;

- le polymère MS S303H (disponible auprès de KANEKA) correspondant à un polyéther comprenant deux groupements (I) de type diméthoxy (p est égal à 1 et $R^4$ représente un groupement méthyle) ayant une masse moléculaire moyenne en nombre d'environ 22 000 Dalton.

Les polymères de formule (IV) ou (IV') peuvent par exemple être obtenus par réaction de polyol(s) avec un ou des diisocyanate(s) suivie d'une réaction avec des aminosilanes ou des mercaptosilanes. Un procédé de préparation de polymères de formule (IV) ou (IV') est décrit dans le document EP 2 583 988. L'homme du métier saura adapter le procédé de fabrication décrit dans ce document dans le cas de l'utilisation de différents types de polyols.

Selon un mode de réalisation préféré de l'invention, la composition adhésive comprend au moins un polymère silylé de formule (II) et/ou (II') ou au moins un polymère silylé de formule (III) et/ou (III').

Selon un mode de réalisation tout particulièrement préféré de l'invention, le polymère (A) est un polymère silylé de formule (III') dans laquelle $R^2$ est un radical divalent dérivé d'un polyéther, de préférence d'un poly(oxyalkylène) diol, et encore plus particulièrement d'un polypropylène glycol.

<u>**Résine tackifiante (B)**</u> :

La composition adhésive réticulable par chauffage selon l'invention comprend également au moins une résine tackifiante (B).

Ladite résine peut être toute résine compatible avec le ou les polymère(s) silylé(s) (A).

On entend désigner par les termes "résine tackifiante compatible" une résine tackifiante qui, lorsqu'elle est mélangée dans les proportions 50%/50% avec le (ou les) polymère (A) de formule (I), donne un mélange substantiellement homogène.

Les résines (B) sont avantageusement choisies parmi :

- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène, ledit procédé pouvant également comprendre une réaction avec des phénols ;
- (iii) les colophanes d'origine naturelle ou modifiées, (telles que par exemple la colophane extraite de la gomme de pins, la colophane de bois extraite des racines de l'arbre et leurs dérivés hydrogénés, dimérisés, polymérisés ou estérifiés par des monoalcools ou des polyols, comme le glycérol ou le pentaérythritol) ;
- (iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) les résines terpéniques, (qui résultent généralement de la polymérisation d'hydrocarbures terpéniques - comme par exemple le mono-terpène (ou pinène)- en présence de catalyseurs de Friedel-Crafts) ;
- (vi) les copolymères à base de terpènes naturels, (tels que, par exemple, le styrène/terpène, l'alpha-méthyl styrène/terpène et le vinyl toluène/terpène) ; ou bien
- (vii) les résines acryliques ayant une viscosité à 100°C inférieure à 100 Pa.s ; ainsi que parmi les mélanges de ces résines.

De telles résines sont disponibles commercialement et parmi celles de type (i), (ii), (iii) et (iv) définis ci-dessus, on peut citer les produits suivants :

- résines de type (i) : Dertophène® 1510 disponible auprès de la société DRT possédant une masse molaire Mn d'environ 870 Da ; Dertophène® H150 disponible auprès de la même société de masse molaire Mn égale à environ 630 Da ; Sylvarez® TP 95 disponible auprès de la société Arizona Chemical ayant une masse molaire Mn d'environ 1200 Da ;
- résines de type (ii) : Cleartack® W100 disponible auprès de la société Cray Valley, qui est obtenue par polymérisation d'alpha-méthyl styrène sans action de phénols, avec une masse molaire en nombre de 900 Da ; Sylvarez® 510 qui est également disponible auprès de la société Arizona Chemical avec une masse molaire Mn d'environ 1740 Da, dont le procédé d'obtention comprend également l'ajout de phénols ;
- résines de type (iii) : Sylvalite® RE 100 qui est un ester de collophane et de pentaeréthritol disponible auprès de la société Arizona Chemical et de masse molaire Mn environ 1700 Da ;
- résines de type (iv) : Picco® AR100 disponible auprès de la société Eastman et de masse molaire Mn d'environ 550 g/mole.

Selon une variante préférée, on utilise comme résine (B) une résine choisie parmi celles de type (i) ou (iv).

**Résine silsesquioxane (C)** :

La composition adhésive réticulable par chauffage selon l'invention comprend également au moins une résine silsesquioxane (C).

Les résines silsesquioxanes sont des composés organiques de silicium pouvant adopter une structure polyhédrique ou une structure polymérique, avec des liaisons Si-O-Si. Ils ont généralement la formule générale suivante :

$$[RSiO_{3/2}]t$$

dans laquelle R, de nature identique ou différente, représente un radical organique, et t est un nombre entier pouvant varier de 6 à 12, de préférence t égale 6, 8, 10 ou 12.

Selon un mode de réalisation, le silsesquioxane (C) a une structure polyhédrique (ou POSS pour « Polyhedral Oligomeric Silsesquioxane » en anglais).

De préférence, le silsesquioxane (C) répond à la formule générale (V) suivante :

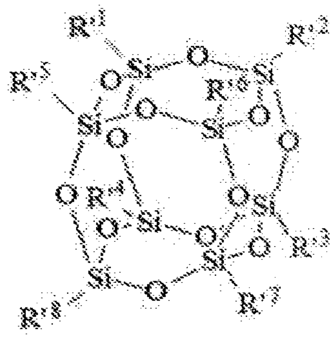

(V)

dans laquelle chacun de R'1 à R'8 représente, indépendamment les uns des autres, un groupe choisi parmi :

- un atome d'hydrogène,
- un radical choisi parmi le groupe constitué d'un radical alcoxy linéaire ou ramifié en C1-C4, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe -OSiR'9R'10 dans lequel R'9 et R'10 représente chacun, indépendamment l'un de l'autre, un atome d'hydrogène ou un radical choisi dans le groupe constitué des alkyles linéaires ou ramifiés en C1-C4, des alcoxys linéaires ou ramifiés en C1-C4, des alcényles en C2-C4, d'un phényle, d'un radical allyle en C3-C6, d'un radical aliphatique cyclique en C3-C8, et d'un radical acyle en C1-C4 ;

à condition :

- qu'au moins un radical parmi les radicaux R'1 à R'8 soit un radical alcoxy en C1-C4; et
- qu'au moins un radical parmi les radicaux R'1 à R'8 soit un radical phényle.

Les silsesquioxanes sont des composés connus qui sont décrits notamment dans la demande WO 2008/107331. Certains sont également disponibles au plan commercial, ainsi le produit de DOW commercialisé sous la dénomination : DOW CORNING® 3074 et DOW CORNING® 3037 (numéro CAS = 68957-04-0).

**Catalyseur de réticulation (D) :**

La composition adhésive réticulable par chauffage selon l'invention comprend également au moins un catalyseur de réticulation (D).

Ce dernier peut être tout catalyseur connu par l'homme du métier pour la condensation de silanol.

Le catalyseur de réticulation (D) peut être choisi dans le groupe constitué :

(D1) des composés organo-métalliques,
(D2) des amines, et
(D3) des acides et de leurs dérivés,
ainsi que de leurs mélanges.

Il peut s'agir également d'un mélange de catalyseurs appartenant au même groupe (D1), (D2) ou (D3) (par exemple un mélange de plusieurs amines), ou un mélange de catalyseurs appartenant à au moins 2 groupes différents choisis parmi les groupes (D1), (D2) et (D3) (par exemple un mélange d'une amine et d'un composé organo-métallique).
Dans le cadre de l'invention, on entend par « composés organo-métalliques », des composés comprenant un radical organique et au moins un métal. Dans le cadre de l'invention, on entend par « radical organique », un radical comprenant au moins un atome de carbone.

(D1) Composés organo-métalliques :

Les composés organo-métalliques peuvent comprendre les composés organométalliques (composés comprenant au moins une liaison covalente métal-carbone), les alcoolates métalliques, les carboxylates métalliques, et les complexes de coordination métalliques avec un (des) ligand(s) organique(s).
A titre d'exemple de ligand organique, on peut citer l'acétylacétonate et les oximes.
L'atome métallique des composés organo-métalliques peut être tout atome métallique connu de l'homme du métier, et peut en particulier être choisi parmi l'étain, l'aluminium, le zinc, le cobalt, le fer, le nickel, le bismuth, le titane, ou le zirconium. Les composés organo-métalliques peuvent d'ailleurs comprendre plusieurs atomes métalliques.
Composés comprenant au moins une liaison covalente métal-carbone :
Les composés comprenant au moins une liaison covalente métal-carbone (composés organométalliques) peuvent être des carboxylates de composés organométalliques, choisis dans le groupe constitué du dilaurate de dibutyle étain (DBTL), du diacétate de dibutyle étain, du diéthylhexanoate de dibutyle étain, du dinéodécanoate de dioctyle étain (par exemple disponible sous la dénomination TIB KAT® 223 auprès de la société TIB CHEMICALS), du dioléate de dibutyle étain, du benzylmaléate de dibutyle étain, du diacétate de diphényle étain, et de leurs mélanges.
Les alcoolates métalliques peuvent être choisis dans le groupe constitué du tétrabutanolate de titane, du tétraisopropylate de titane, du tétrabutanolate de zirconium, du tétratisopropylate de zirconium, et de leurs mélanges.
Les carboxylates métalliques peuvent être choisis dans le groupe constitué du 2-éthylcaproate de zinc, du diacétate de zinc, du dinéodécanoate de zinc, du diundécénoate de zinc, du diméthacrylate de zinc, de l'acétylacétonate de cobalt, du diacétate de cobalt, de l'acétylacétonate de fer, du diacétate de fer, de l'acétylacétonate de nickel, du diacétate de nickel, de l'acétate de bismuth, du trioctanoate de bismuth, du dinéodécanoate de bismuth, du dinéodécanoate de zinc et de bismuth, et de leurs mélanges.
Les complexes de coordination métalliques avec un(des) ligand(s) organique(s) peuvent être choisis dans le groupe constitué de l'acétylacétonate de zinc, de l'acétylacétonate de titane (par exemple disponible commercialement sous la dénomination TYZOR ® AA75 auprès de la société DORF KETAL), du tétraacétylacétonate de titane, du trisacétylacétonate d'aluminium, des chélates d'aluminium tel que par exemple le mono-acétylacetonate bis-(éthylacétoacétate) (par exemple disponible commercialement sous la dénomination K-KAT ® 5218 auprès de la société KING INDUSTRIES), du tétraacétylacétonate de zirconium, du diisopropoxybis(éthylacétonato)titane, et de leurs mélanges.

(D2) Amines :

Les amines peuvent être des amines primaires, des amines secondaires ou des amines tertiaires.
De préférence, les amines sont choisies dans le groupe constitué de la triéthylamine, de la tributylamine, de la tétraméthylguanidine, du 1,8-diazabicyclo[5.4.0]-7-undécène, du 1,4-diazabicyclo[2.2.2]octane, du 1,5-diazabicyclo [4.3.0]non-5-ène, de la N,N-bis(N,N-diméthyl-2-aminoéthyl)méthylamine, de la N,N-diméthylcyclohexaylamine, de la N,N-diméthylphénylamine, de la N-éthylmorpholine, et de leurs mélanges.

(D3) Catalyseurs acides et leurs dérivés :

Les catalyseurs acides peuvent être choisis parmi les catalyseurs acides inorganiques, les catalyseurs acides organiques, et leurs mélanges.
Parmi les catalyseurs acides inorganiques, on peut par exemple citer l'acide phosphorique ou orthophosphorique, l'acide phosphoreux, l'acide hypophosphoreux, ou l'acide sulfurique.
Les catalyseurs acides organiques peuvent être choisis parmi les acides sulfoniques, les acides carboxyliques,

les organophosphates acides, les organophosphonates acides, les acides phosphoniques, et leurs mélanges.

De préférence, les catalyseurs acides organiques et inorganiques ont un pKa inférieur ou égal à 6, de préférence inférieur ou égal à 4, avantageusement inférieur ou égal à 2, avantageusement inférieur ou égal à 0.

Les acides sulfoniques peuvent être aliphatiques ou aromatiques, éventuellement substitués (par exemple substitués par au moins un substituant choisi parmi les halogènes (tels que le fluor), les hydroxyles, les alkyles, les amines, et leurs mélanges), et peuvent être mono- ou disulfoniques.

Les acides sulfoniques peuvent être choisis parmi les acides N-alkylaminoalkylsulfoniques et les acides N,N-dialkylaminoalkylsulfoniques (zwitterions), tels que par exemple l'acide 2-(N-Morpholino)éthanesulfonique, l'acide 3-(N-morpholino)propanesulfonique, l'acide 4-[N-morpholino]butanesulfonique, l'acide 1,4-pipérazinediéthanesulfonique, l'acide N-2-hydroxyéthylpipérazine-N'-2-éthanesulfonique, l'acide 2-(N-morpholino)éthanesulfonique, l'acide N -Morpholinométhanesulfonique, l'acide N-(2-hydroxyéthyl)pipérazine-N'-méthanesulfonique, l'acide pipérazine-N,N'-bis(méthanesulfonique), l'acide cyclohexylaminométhanesulfonique, l'acide N-[tris(hydroxyméthyl)méthyl]-aminométhanesulfonique, l'acide N,N-bis(2-hydroxyéthyl)aminométhanesulfonique ; l'acide para-toluène sulfonique ; l'acide benzène sulfonique ; l'acide méthanesulfonique ; l'acide dodécylbenzène sulfonique ; l'acide dodécylbenzène disulfonique ; l'acide dinonylnaphtalène disulfonique ; l'acide dinonylnaphtalène sulfonique ; l'acide trifluorométhylsulfonique ; et leurs mélanges.

En particulier, les acides sulfoniques sont choisis parmi l'acide para-toluène sulfonique, l'acide benzène sulfonique, l'acide méthanesulfonique, l'acide dodécylbenzène sulfonique, l'acide dodécylbenzène disulfonique, l'acide dinonylnaphtalène disulfonique, l'acide dinonylnaphtalène sulfonique, l'acide trifluorométhylsulfonique, et leurs mélanges.

Parmi les catalyseurs acides carboxyliques, on peut par exemple citer l' acide malonique, l'acide succinique, l'acide maléïque, l'acide oxalique, l'acide acétique, l'acide lactique, l'acide benzoïque, l'acide citrique, l'acide glycolique, et leurs mélanges.

Dans le cadre de l'invention, et sauf mention contraire, on entend par «organophosphate acide », un ester de l'acide phosphorique comprenant au moins un radical -OH. Par exemple, le phosphate de méthyle est un organophosphate acide comprenant deux radicaux -OH et a la structure suivante :

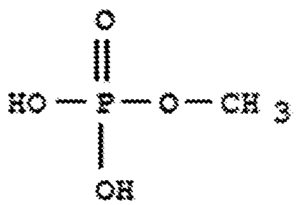

En particulier, les organophosphates acides ont la formule suivante :

$$(RO)_g-(P=O)-(OH)_h$$

dans laquelle :

- R est un radical organique, en particulier un radical choisi parmi les alkyles en C1-C22, linéaire ou ramifiés, les cycloalkyles, les aryles, et leurs mélanges (lesdits groupes alkyles, cycloalkyles et aryles étant éventuellement substitués); et
- g et h sont des nombres entiers, avec g + h = 3 et h = 1 ou 2.

Les organophosphates acides, peuvent par exemple être choisis dans le groupe constitué des mono- ou dialkyle phosphates acides en C1-C22 et de leurs mélanges, tel que par exemple le phosphate de butyle, le phosphate de dibutyle, le phosphate de di-(2-éthylhexyle), le phosphate de 2-éthylhexyle et leurs mélanges ; des phosphates de mono-, ou diaryle, et de leurs mélanges, tel que par exemple le phosphate de monophényle, le phosphate de diphényle et leurs mélanges ; des alkyle-phényle phosphates ; et de leurs mélanges.

Dans le cadre de l'invention, et sauf mention contraire, on entend par «organophosphonate acide», un composé phosphoré ayant la formule générale suivante :

$$R'-(P=O)-(OH)(OR'')$$

dans laquelle R' et R" sont des radicaux organiques, de préférence choisis indépendamment l'un de l'autre, parmi les alkyles en C1-C22, linéaire ou ramifiés, les cycloalkyles, les aryles, et leurs mélanges (lesdits groupes alkyles,

cycloalkyles et aryles étant éventuellement substitués).

Parmi les organophosphonates acides, on peut par exemple citer les mono alkyle phosphonates acides en C1-C22.

Dans le cadre de l'invention, et sauf mention contraire, on entend par « acide phosphonique», un composé phosphoré ayant la formule générale suivante :

$$R'''\text{-}(P{=}O)\text{-}(OH)_2$$

dans laquelle R''' est un radical organique, de préférence choisi parmi les alkyles en C1-C22, linéaire ou ramifiés, les cycloalkyles, les aryles, et leurs mélanges (lesdits groupes alkyles, cycloalkyles et aryles étant éventuellement substitués).

Parmi les acides phophoniques, on peut par exemple citer les acides N-alkylaminoalkylphosphoniques (zwitterions), les acides N,N-dialkylaminoalkylphosphoniques (zwitterions), les alkylphosphoniques en C1-C20 tels que par exemple l'acide méthylphosphonique, l'acide ethyl phosphonique, l'acide propylphosphonique, l'acide butylphosphonique, l'acide t-butylphosphonique, l'acide isobutylphosphonique, l'acide hexylphosphonique, l'acide ethyl-2-hexylphosphonique et homologues supérieurs linéaires ou ramifiés, l'acide benzylphosphonique, l'acide phénylphosphonique, l'acide toluylphosphonique, l'acide xylylphosphonique.

A titre de catalyseurs acides organiques, on peut par exemple citer le NACURE ® 155 (acide dinonylnaphtalène disulfonique, à 55% de matière active dans l'isobutanol) commercialisé par KING INDUSTRIES, le NACURE ® 1051 (acide dinonylnaphtalène sulfonique, à 50% de matière active dans le 2-butoxyéthanol) commercialisé par KING INDUSTRIES, le NACURE ® 5076 (acide dodécylbenzène sulfonique, à 70% de matière active dans l'isopropanol) commercialisé par KING INDUSTRIES, le K-CURE ® 1040 (acide para-toluène sulfonique, à 40% de matière active dans l'isopropanol) commercialisé par KING INDUSTRIES, le NACURE ® 4000 (mélange de mono et dialkyle phosphates acides, 100% de matière active) commercialisé par KING INDUSTRIES.

Les dérivés d'acide selon l'invention, peuvent être des anhydrides d'acide, des esters d'acide, des sels d'ammonium d'acide, l'acide étant tel que décrit ci-dessus.

Les dérivés d'acide sont en particulier des acides dits « bloqués » ou encore « latents » qui permettent avantageusement de libérer l'acide par activation thermique (par exemple à une température allant de 70°C à 170°C, de préférence à une température allant de 90°C à 120°C) ou par hydrolyse, ou par photoactivation, de préférence par activation thermique. L'acide bloqué permet avantageusement de libérer l'acide qui est l'entité ayant l'activité catalytique. Par exemple, le sel d'ammonium formé entre l'amino méthyl propanol et l'acide para-toluène sulfonique est un acide bloqué (dérivé d'acide) qui par activation thermique libère l'acide para-toluène sulfonique.

Les dérivés d'acide peuvent être préparés par tout moyen connu de l'homme du métier à partir de l'acide correspondant, par exemple par utilisation des réactions typiques acides/bases. Par exemple, le procédé pour faire un ester implique typiquement la condensation d'un composé acide avec un composé comprenant un groupe hydroxyle tel que par exemple un alcool, ou avec un composé de type oxirane. Les sels d'ammonium peuvent être préparés à partir de tout acide susmentionné, avec l'ammoniaque ou avec une amine primaire, secondaire ou tertiaire. Les amines peuvent éventuellement comprendre au moins un groupe fonctionnel tel qu'un groupe hydroxy (alcanolamines), un groupe alkyle en C1-C4. Les sels d'ammonium (zwitterions) peuvent également être préparés par modification du pH d'une solution contenant par exemple des acides N-alkylaminoalkylphosphoniques, des acides N,N-dialkylaminoalkylphosphoniques, des acides N-alkylaminoalkylsulfoniques ou encore des acides N,N-dialkylaminoalkylsulfoniques.

De préférence, le catalyseur est un sel d'ammonium d'un acide sulfonique (l'acide sulfonique étant tel que décrit ci-dessus), un sel d'ammonium d'un acide phosphonique (l'acide phosphonique étant tel que décrit ci-dessus), un sel d'ammonium d'un organophosphonate acide (l'organophosphonate acide étant tel que décrit ci-dessus), ou un sel d'ammonium d'un organophosphate acide (organophosphate acide étant tel que décrit ci-dessus).

A titre d'amines pour la préparation des sels d'ammonium, on peut par exemple citer le 2-amino-2-méthyl-1-propanol, la triéthylamine, l'aniline, la pyridine, le diméthylaminoéthanol, les alkypyridines, la diisopropanolamine, la diméthyléthanolamine, la triéthanolamine, les oxazolidines, les oxazolidines bicycliques, les amidines, les diazabicyclooctanes, les guanidines, les N-alkyl morpholine, les aminopyridine, les aminoalkylpyridines, les aminopyrrolidines, l'indazole, l'imidazole, le pyrazole, la pyrazine, la pyrimidine, la purine, l'imidazoline, la pyrazoline, la pipérazine, l'aminomorpholine, les aminoalkylmorpholines, et leurs mélanges. De préférence, les amines sont des amines tertiaires.

A titre de dérivés d'acide, on peut par exemple citer le NACURE ® 3327 ou le NACURE ® 3525 (acide dinonylnaphtalène disulfonique bloqué par une amine, à 25% de matière active dans l'isopropanol et l'isobutanol) commercialisé par KING INDUSTRIES, le NACURE ® 1557 ou le NACURE ® 1953 (acide dinonylnaphtalène sulfonique bloqué par une amine, à 25% de matière active dans un mélange butanol et 2-butoxyéthanol) commercialisé par KING INDUSTRIES, le NACURE ® 5225 ou NACURE ® 5528 ou NACURE ® 5925 (acide dodécylbenzène sulfonique bloqué par une amine, à 25% de matière active dans l'isopropanol) commercialisé par KING INDUSTRIES, le NACURE ® 2107 ou NACURE ® 2500 (acide para-toluène sulfonique bloqué par une amine, à 25% ou 26% de matière active dans

l'isopropanol) commercialisé par KING INDUSTRIES, le NACURE ® 2501 ou NACURE ® 2530 (acide para-toluène sulfonique bloqué par une amine, à 25% de matière active dans un mélange isopropanol et méthanol) commercialisé par KING INDUSTRIES, le NACURE ® 4167 (dialkyle phosphate bloqué par une amine organique, à 25% de matière active dans un mélange isopropanol et isobutanol) commercialisé par KING INDUSTRIES, le NACURE ® 4575 (phosphate acide bloqué par une amine, à 25% de matière active dans un mélange méthanol et butanol) commercialisé par KING INDUSTRIES.

De préférence, le catalyseur est choisi dans le groupe constitué des composés organo-métalliques (en particulier les complexes de coordinations à base d'aluminium, et plus particulièrement les chélates d'aluminium), de l'acide orthophosphorique, des organophosphates acides (de préférence mono- ou dialkyle phosphate acide en C1-C22 et leurs mélanges), des sels d'ammonium (en particulier d'acide sulfonique ou d'organophosphate acide), et de leurs mélanges.

De façon encore plus préférée, le catalyseur est choisi dans le groupe constitué de l'acide orthophosphorique, des organophosphates acides (de préférence mono- ou dialkyle phosphate acide en C1-C22 et leurs mélanges), des sels d'ammonium (en particulier d'acide sulfonique ou d'organophosphate acide).

**Autres additifs :**

La composition adhésive réticulable par chauffage selon l'invention peut également comprendre un ou plusieurs additifs choisis dans le groupe constitué des absorbeurs d'humidité, des plastifiants, des antioxydants, des pigments, des colorants, des promoteurs d'adhérence, des stabilisants UV, des additifs ignifuges ou encore des charges telles que des charges carbonatées, par exemple de type carbonate de calcium.

L'absorbeur d'humidité (ou agent dessicant) peut être par exemple choisi parmi les dérivés alkoxysilane hydrolysables, non polymériques, de masse moléculaire inférieure à 500 g/mol, de préférence choisi parmi les dérivés de triméthoxysilane et de triéthoxysilane. Un tel agent peut typiquement prolonger la durée de conservation de la composition durant le stockage et le transport avant son utilisation. On peut par exemple citer le gamma-métacryloxypropyltriméthoxysilane (par exemple disponible sous la dénomination commerciale SILQUEST ® A-174 auprès de la société MOMENTIVE), le méthacryloxyméthyltriméthoxysilane (par exemple disponible sous la dénomination GENIOSIL ® XL33 auprès de WACKER), le vinyltriméthoxysilane, l'isooctyltriméthoxysilane, ou le phényltriméthoxysilane.

La teneur en absorbeur d'humidité est de préférence inférieure ou égale à 3% en poids, de préférence encore inférieure ou égale à 2% en poids par rapport au poids total de la composition A. Lorsqu'il est présent, l'absorbeur d'humidité peut par exemple représenter de 0,1% à 3% en poids ou de 1% à 2% en poids par rapport au poids total de la composition selon l'invention.

La composition selon l'invention peut également comprendre un agent plastifiant.

A titre d'exemple d'agent plastifiant utilisable, on peut utiliser n'importe quel agent plastifiant habituellement utilisé dans le domaine des adhésifs, tel que par exemples les phtalates, les benzoates, les esters de trimethylolpropane, les esters de triméthyloléthane, les esters de triméthylolméthane, les esters de glycérol, les esters de pentaerythritol, les huiles minérales napthéniques, les adipates, les cyclohexyldicarboxylates, les huiles paraffiniques, les huiles naturelles (éventuellement époxydées), les polypropylènes, les polybutylènes, les polyisoprènes hydrogénés, et leurs mélanges.

Parmi les phtalates, on peut par exemple citer le diisononyl phtalate, le di-isobutyl phtalate, le dioctyle phtalate, le dicyclohexyl phtalate, le diisooctyle phtalate, le diisododécyle phtalate, le dibenzyle phtalate ou le butylbenzyle phtalate.

Parmi les benzoates, on peut par exemple citer : le néopentylglycol dibenzoate (par exemple disponible sous la dénomination UNIPLEX ® 512 auprès de LANXESS), le dipropylèneglycol dibenzoate (par exemple disponible sous la dénomination BENZOFLEX ® 9-88SG auprès de EASTMAN), un mélange de diéthylène glycol dibenzoate et de dipropylène glycol dibenzoate (par exemple disponible sous la dénomination K-FLEX ® 850 S auprès de KALAMA CHEMICAL), ou encore un mélange de diéthylène glycol dibenzoate, de dipropylène glycol dibenzoate et de triéthylène glycol dibenzoate (par exemple disponible sous la dénomination BENZOFLEX ® 2088 auprès de EASTMAN).

Parmi les esters de pentaérythritol, on peut par exemple citer le tétravalérate de pentaérythritol (par exemple disponible sous la dénomination PEVALEN™ auprès de la société PESTORP).

Parmi les cyclohexanedicarboxylates, on peut par exemple citer le diisononyl 1,2-cyclohexanedicarboxylate (par exemple disponible sous la dénomination HEXAMOLL DINCH ® auprès de BASF).

La teneur totale en plastifiant(s) dans la composition selon l'invention peut aller de 0% à 30% en poids, de préférence de 1% à 30% en poids, voire par exemple de 1% à 15% en poids par rapport au poids total de ladite composition.

La composition selon l'invention peut également comprendre un antioxydant (désigné également par le terme d'agent stabilisant UV).

Les antioxydants sont des composés qui peuvent être introduits pour protéger la composition d'une dégradation résultant d'une réaction avec de l'oxygène qui est susceptible de se former par action de la chaleur ou de la lumière. Ces composés peuvent inclure des antioxydants primaires qui piègent les radicaux libres. Les antioxydants primaires peuvent

être utilisés seuls ou en combinaison avec d'autres antioxydants secondaires ou des stabilisants UV.

On peut par exemple citer l'IRGANOX ® 1010, l'IRGANOX ® B561, l'IRGANOX ® 245, l'IRGANOX ® 1076, l'IRGAFOS ® 168 commercialisés par BASF.

Une quantité d'antioxydant allant de 0,1% à 3%, de préférence de 1% à 3% en poids, sur la base du poids total de la composition selon l'invention est généralement utilisée.

La composition adhésive selon l'invention peut se présenter sous la forme d'une composition adhésive monocomposante ou d'une composition adhésive multicomposante, de préférence bicomposante.

**I. Composition adhésive monocomposante** :

Selon un premier mode de réalisation, la composition adhésive selon l'invention se présente sous la forme d'une composition monocomposante.

Selon ce mode de réalisation, ladite composition monocomposante comprend généralement :

- de 3% à 90% en poids, de préférence de 5% à 80% en poids, préférentiellement de 10% à 70% en poids, avantageusement de 20% à 60% en poids d'au moins un polymère (A) comprenant un groupe alkoxysilane hydrolysable ;
- de 15% à 80% en poids, de préférence de 20% à 70%, préférentiellement de 25% à 70%, en particulier de 30% à 60%, avantageusement de 40% à 60% en poids d'au moins une résine tackifiante (B) ;
- de 0,1 à 30% en poids, de préférence de 1% à 20% en poids, préférentiellement de 2% à 15% en poids, avantageusement de 3% à 12% en poids d'au moins une résine silsesquioxane (C) ; et
- de 0,01% à 10%, de préférence de 0,01% à 5%, préférentiellement de 0,05% à 4%, avantageusement de 0,1% à 3%, en particulier de 0,5% à 2%, en poids de catalyseur de réticulation (D) ;

ces pourcentages en poids étant indiqués sur la base du poids total de composition monocomposante.

La composition monocomposante peut être préparée par un procédé qui comprend :

- une étape de mélange à l'abri de l'air, de préférence sous atmosphère inerte, du (ou des) polymère (A) avec la ou les résines tackifiantes (B), et de la ou des résines silsesquioxanes (C), à une température comprise entre 50 et 180°C, de préférence entre 100 et 150°C, puis
- une étape de refroidissement dudit mélange à une température allant de 50 à 130°C, et avantageusement d'environ 70 °C, puis
- une étape d'incorporation dans ledit mélange du catalyseur de réticulation (D) et, le cas échéant, des autres additifs optionnels.

**II. Composition adhésive multicomposante** :

Selon un second mode de réalisation, la composition adhésive selon l'invention se présente sous la forme d'une composition multicomposante comprenant :

- une composition U (en tant que 1ère composante) comprenant :
  - le (ou les) polymère (A) comprenant un groupe alkoxysilane hydrolysable, tel que défini précédemment ; et
  - la (ou les) résine tackifiante (B) telle que définie précédemment ; et
- une composition V (en tant que 2ème composante) comprenant :
  - le (ou les) catalyseur de réticulation (D) tel que défini précédemment ; et
  - au moins un composé (E) choisi parmi :
    - un composé (E1) ayant une masse moléculaire moyenne en nombre allant de 300 g/mol à 100 000 g/mol ; et
    - un composé (E2) ayant une tension de vapeur à 20°C supérieure ou égale à 0,08 kPa ;

  ainsi que leurs mélanges ;

la résine silsesquioxane (C) étant comprise dans la composition U ou bien dans la composition V.

Les différentes composantes de ladite composition adhésive multicomposante sont destinées à être mélangées

au moment de la mise en œuvre de la réaction de réticulation, conformément au procédé de fabrication d'un support auto-adhésif décrit ci-après.

La composition adhésive multicomposante peut comprendre une ou des composition(s) additionnelle(s) en plus des compositions U et V, ladite (lesdites) composition(s) additionnelle(s) pouvant comprendre tout type de composé(s). Par exemple, la composition adhésive multicomposante peut comprendre une composition W additionnelle comprenant au moins une résine tackifiante, par exemple choisie parmi celles décrites ci-dessus pour la composition U. La composition adhésive multicomposante selon l'invention peut également comprendre une composition W comprenant de l'eau. L'eau peut être sous forme liquide ou gazeuse, ou encapsulée, ou absorbée, ou contenue dans la structure chimique d'un composant. L'eau peut être issue d'un ou plusieurs composants qui peut la rendre libre et disponible ultérieurement.

La composition adhésive multicomposante selon l'invention conduit avantageusement à des vitesses de réticulation élevées pour le procédé de fabrication du support auto-adhésif décrit ci-après. La réactivité améliorée permet avantageusement d'éviter le passage dans un four, ou de diminuer le temps de séjour dans le four de réticulation, lors de la préparation de supports auto-adhésifs, et ainsi d'atteindre un temps de séjour court dans le four, à savoir par exemple inférieur à 5 min, de préférence inférieur à 1 min, préférentiellement inférieur à 30 secondes, et avantageusement inférieurs à 10 secondes. La composition adhésive multicomposante selon l'invention conduit donc avantageusement à des cadences de production industrielles élevées, tout en présentant de bonnes propriétés auto-adhésives après réticulation.

Les compositions U et V comprises dans ladite composition adhésive (avant mélange) sont stables au stockage, à la température et/ou à l'humidité. La plus grande stabilité dans le temps permet avantageusement un maintien en stockage plus long et une manipulation avec un risque moindre de réaction, dégradation ou réticulation des compositions U et V, entre leur production et leur application à chaud.

La composition adhésive multicomposante selon l'invention permet avantageusement la formation d'une couche adhésive uniforme ne présentant pas de problème de formation non contrôlée et inhomogène de grains ou de gels, et/ou permet avantageusement une réticulation homogène sur l'ensemble de la couche support.

La composition adhésive multicomposante peut avantageusement comprendre une teneur élevée en catalyseur, sans engendrer des phénomènes de prise en masse dans les conduits de circulation des composants de l'adhésif lors de la production d'articles auto-adhésifs.

Selon un mode de réalisation encore plus préféré, la composition adhésive multicomposante selon l'invention est une composition adhésive bicomposante constituée des compositions U et V susmentionnées.

**<u>II.1. Composition U</u> :**

La composition U comprend généralement:

- de 3% à 90% en poids du (ou des) polymère (A) comprenant un groupe alkoxysilane hydrolysable, de préférence de 5% à 80%, préférentiellement de 10% à 70%, avantageusement de 20% à 60% ;
- de 15% à 80% en poids de la (ou des) résine tackifiante (B), de préférence de 20% à 70%, préférentiellement de 25% à 70%, en particulier de 30% à 60%, avantageusement de 40% à 60% en poids ; et, le cas échéant
- de 0,1 à 30% en poids, de préférence de 1% à 20% en poids, préférentiellement de 2% à 15% en poids, avantageusement de 3% à 12% en poids d'au moins une résine silsesquioxane ( C ) ;

ces pourcentages en poids étant indiqués sur la base du poids total de la composition U.

En outre, la composition U peut également comprendre un ou plusieurs additifs, tels que décrits précédemment, et choisis dans le groupe constitué des absorbeurs d'humidité, des plastifiants, des antioxydants, des pigments, des colorants, des promoteurs d'adhérence, des stabilisants UV et des charges.

La composition U peut être préparée par mélange de l'ensemble des composants de ladite composition U, quel que soit l'ordre d'incorporation des différents composants. Plusieurs composants de la composition U peuvent être mélangés ensemble, puis mélangés ensuite avec d'autre(s) composant(s) de ladite composition U.

Le mélange peut être réalisé à une température allant de 23°C à 200°C.

**<u>II.2. Composition V</u> :**

La composition V comprend :

- le (ou les) catalyseur de réticulation (D) tel que défini précédemment ;
- au moins un composé (E) choisi parmi :

- un composé (E1) ayant une masse moléculaire moyenne en nombre allant de 300 g/mol à 500 000 g/mol;
- un composé (E2) ayant une tension de vapeur à 20°C ou égale à 0,08 kPa ; et
- les mélanges de (E1) et (E2) ; ainsi que, le cas échéant,

- la résine silsesquioxane (C) telle que définie précédemment.

Selon un mode de réalisation, la composition V comprend :

- un composé (E1) ;
- un mélange de composés (E1) différents ;
- un composé (E2) ;
- un mélange de composés (E2) différents ; ou
- un mélange d'au moins un composé (E1) et d'au moins un composé (E2).

**<u>II.2.1. Composé (E)</u> :**

La présence du(des) composé(s) (E) permet la dilution du catalyseur de réticulation (D) dans la composition V, et donc avantageusement d'augmenter la valeur du point éclair de ladite composition V. Ceci a notamment pour effet d'avantageusement améliorer la sécurité du procédé de préparation d'article auto-adhésif.

En outre, la présence du(des) composé(s) (E), en particulier dans des teneurs supérieures ou égales à 50% en poids de la composition V, permet avantageusement de diminuer les risques de toxicité, lors de l'emploi par exemple de catalyseur organo-métallique.

Par ailleurs, la présence du(des) composé(s) (E) dans la composition V, permet avantageusement une meilleure dispersion du(des) catalyseur(s) (D) au sein de la composition adhésive bicomposante (obtenue après mélange des compositions U et V). Cette meilleure dispersion conduit avantageusement à l'enduction d'une couche adhésive uniforme ne présentant pas de problème de formation de grains et/ou de gels qui altèrent la qualité optique des enductions finales, ou qui gênent l'application sans défaut de l'enduction sur les surfaces à coller.

De plus, la présence du(des) composé(s) (E) dans la composition V, permet avantageusement d'ajouter de très faibles quantités de catalyseur (D).

Le(s) composé(s) (E) est(sont) avantageusement inerte(s) vis-à-vis du catalyseur de réticulation (D), c'est-à-dire qu'il(s) ne réagit(ssent) pas avec ledit catalyseur.

**II.2.1.1 Composé (E1) :**

Le composé (E1) a de préférence une masse moléculaire moyenne en nombre allant de 1 000 g/mol à 50 000 g/mol, de préférence de 1 000 g/mol à 20 000 g/mol, en particulier de 2 000 g/mol à 20 000 g/mol, préférentiellement de 3 000 g/mol à 20 000 g/mol, par exemple de 4 000 g/mol à 18 000 g/mol, avantageusement de 5 000 g/mol à 10 000 g/mol, et notamment de 7 000 g/mol à 9 000 g/mol.

La masse moléculaire moyenne en nombre du composé (E1) peut être mesurée par des méthodes bien connues de l'homme du métier, par exemple par chromatographie d'exclusion stérique en utilisant des étalons de type polystyrène.

Le composé (E1) a de préférence une viscosité à 23°C allant de 10 mPa.s à 100 000 mPa.s, en particulier de 500 à 50 000 mPa.s, de préférence de 500 à 20 000 mPa.s, préférentiellement de 500 à 15 000 mPa.s, avantageusement de 500 à 10 000 mPa.s, par exemple de 1 000 à 5 000 mPa.s, de préférence de 1 000 à 3 000 mPa.s.

Selon l'invention, le composé (E1) peut être choisi dans le groupe constitué par :

(E1-1) des polyols ;
(E1-2) des organosilanes ;
(E1-3) des résines tackifiantes ;
(E1-4) des esters de polyol ;
(E1-5) des polymères mono- ou disilylés ;
(E1-6) des polyétheramines ;

ainsi que leurs mélanges.

Selon l'invention, le composé (E1) peut être un composé réactif ou non réactif, également désigné par le terme de diluant réactif ou non réactif. On entend par réactif, le fait qu'il comprend au moins une fonction pouvant réagir avec la(les) fonction(s) alkoxysilane du polymère silylé de la composition U, lors du mélange des compositions U et V. Par exemple, les polyols, les résines tackifiantes, les esters de polyol sont des composés non réactifs. Par exemple, les organosilanes et les polymères mono- ou disilylés sont des composés réactifs.

L'utilisation de composé (E1) réactif permet avantageusement de conduire à des compositions adhésives après mélange ayant une meilleure tenue en température.

**Polyols (E1-1) :**

Selon un mode de réalisation, le composé (E1) est un polyol choisi dans le groupe constitué des polyéther polyols, des polyester polyols, des polytétrahydrofurane polyols, des polyacrylate polyols, des polycarbonate polyols, des polyéther carbonate polyols, des polyester carbonate polyols, des polyacétal polyols, des poly(ester-amide) polyols, des polythioéther polyols, des polyoléfine polyols, et de leurs mélanges, de préférence le composé (E1) étant choisi parmi les polyéther polyols, les polyester polyols et leurs mélanges.

Dans le cadre de l'invention, on entend par « polyol », tout composé hydrocarboné, linéaire ou ramifié, cyclique ou acyclique, saturé ou insaturé, aromatique ou aliphatique, comprenant au moins deux fonctions hydroxyle (OH). Le polyol peut être éventuellement substitué par un groupe fonctionnel, et/ou comprendre un ou plusieurs groupes divalents choisi parmi les groupes éthers (-O-), et carboxyle (-C(=O)O- ou -OC(=O)-).

Les polyols peuvent être choisis parmi les diols, les triols, et leurs mélanges.

Selon un mode de réalisation, le composé (E1) est un polyol choisi dans le groupe constitué des polyols ayant un $I_{OH}$ allant de 5 à 500 mg KOH/g, de préférence de 5 à 250 mg KOH/g, préférentiellement de 6 à 50 mg KOH/g, en particulier de 10 à 28 mg KOH/g.

L'indice hydroxyle d'un polyol $I_{OH}$ représente le nombre de fonctions hydroxyles par gramme de polyol, et est exprimé sous la forme du nombre équivalent de milligrammes de potasse (KOH) utilisés dans le dosage des fonctions hydroxyles, déterminé expérimentalement par titrimétrie selon la norme ISO 14900 :2001. Dans le cas d'un mélange de polyols, l'$I_{OH}$ peut également être calculé à partir des $I_{OH}$ connus de chacun des polyols, et de leur teneur pondérale respectivement dans ledit mélange.

Les polyacétal polyols peuvent par exemple être ceux préparés par réaction entre un glycol (tel que par exemple le diéthylène glycol) avec le formaldéhyde. Des polyacétals peuvent également être préparés par polymérisation d'acétals cycliques.

Les polyoléfine polyols peuvent être les homopolymères et copolymères de butadiène comprenant des groupes hydroxyles terminaux.

Les polycarbonate polyols peuvent être ceux obtenus par réaction entre au moins un diol comprenant de 2 à 10 atomes de carbone (tel que par exemple le 1,3-propanediol, le 1,4-butanediol, le 1,6-hexanediol, le diéthylène glycol ou le tétraéthylène glycol) avec au moins un diaryl carbonate comprenant de 3 à 20 atomes de carbone, tel que par exemple le diphényl carbonate, ou avec le phosgène.

Les polyester polyols peuvent être :

- les polyester polyols d'origine naturelle tel que l'huile de ricin ;
- les polyester polyols issus d'une polymérisation avec ouverture de cycle d'au moins une lactone cyclique (comprenant de préférence de 3 à 7 atomes de carbone) avec au moins un diol, tels que les polycaprolactone polyols ;
- les polyester polyols résultant de la condensation entre :

  o au moins un acide dicarboxylique ou d'au moins un de ses anydrides ou diesters correspondants ; et
  o au moins un diol.

Le(s) acide(s) dicarboxylique(s) utilisable(s) pour la synthèse des polyester polyols susmentionnés comprennent de préférence de 3 à 40 atomes de carbone, et préférentiellement de 6 à 10 atomes de carbone.

De préférence, le(s) acide(s) dicarboxylique(s) utilisable(s) pour la synthèse des polyester polyols susmentionnés est(sont) choisi(s) dans le groupe constitué de l'acide malonique, de l'acide succinique, de l'acide fumarique, de l'acide glutarique, de l'acide adipique, de l'acide 1,3- ou 1,4-cyclohexane dicarboxylique, de l'acide 3-méthyl-1,5-pentanedicarboxylique, de l'acide 1,10-décanedicarboxylique, de l'acide 1,12-dodécanedicarboxylique, de l'acide 1,18-octadécanedicarboxylique, de l'acide méthyltétrahydrophthalique, de l'acide hexahydrophthalique, de l'acide tétrahydrophthalique, de l'acide azélaique, de l'acide sébacique et de leurs mélanges.

Le(s) diol(s) utilisable(s) pour la synthèse des polyester polyols susmentionnés peu(ven)t être choisi(s) parmi les polyalkylène diols, les polyoxyalkylène-diols, et leurs mélanges, la partie alkylène (saturée) de ces composés, étant de préférence linéaire ou ramifiée, comprend de préférence de 2 à 40 atomes de carbone, préférentiellement de 2 à 8 atomes de carbone.

De préférence, le(s) diol(s) utilisable(s) pour la synthèse des polyester polyols susmentionnés est(sont) choisi(s) dans le groupe constitué de l'éthylène glycol, du diéthylène glycol, du triéthylène glycol, du néopentyl glycol, du 1,6-hexanediol, du butanediol, du propylène glycol, du dipropylène glycol, du tétraéthylène glycol, du tripropylène glycol, du 3-méthyl-1,5-pentanediol, du 2,2-diméthyl-1,3-propanediol, et de leurs mélanges.

Parmi les polyester polyols, on peut par exemple citer les produits suivants de fonctionnalité hydroxyle égale à 2 :

- TONE ® 0240 (disponible auprès de UNION CARBIDE) qui est une caprolactone de masse moléculaire moyenne en nombre d'environ 2 000 Da, de $I_{OH}$ égal à 56, et un point de fusion d'environ 50°C ;
- DYNACOLL ® 7381 (disponible auprès d'EVONIK) dont la masse moléculaire moyenne en nombre est d'environ 3 500 Da, de $I_{OH}$ égal à 30, et ayant un point de fusion d'environ 65°C ;
- DYNACOLL ® 7360 (disponible auprès d'EVONIK) résultant de la condensation de l'acide adipique avec l'hexanediol, dont la masse moléculaire moyenne en nombre est d'environ 3 500 Da, de $I_{OH}$ égal à 30, et ayant un point de fusion d'environ 55°C ;
- DYNACOLL ® 7330 (disponible auprès d'EVONIK) dont la masse moléculaire moyenne en nombre est d'environ 3 500 Da, de $I_{OH}$ égal à 30, et ayant un point de fusion d'environ 85°C ;
- DYNACOLL ® 7363 (disponible auprès d'EVONIK) résultant de la condensation de l'acide adipique avec l'hexanediol, dont la masse moléculaire moyenne en nombre est d'environ 5 500 Da, de $I_{OH}$ égal à 21, et ayant un point de fusion d'environ 57°C.

Dans le cadre de l'invention, on entend par « fonctionnalité hydroxyle d'un polyester polyol», le nombre moyen de fonction hydroxyle par mole de polyester polyol.

Les polyester polyols peuvent être amorphes ou cristallins, de préférence amorphes.

De préférence, les polyester polyols sont ceux obtenus par réaction de condensation entre l'acide adipique et un mélange du néopentyl glycol, de l'éthylène glycol et du 1,6-hexanediol ; ou entre l'acide adipique et le 3-méthyl-1,5-pentanediol.

Les polyéther polyols peuvent être des dérivés oxyalkylés de diols (tels que par exemple l'éthylène glycol, le propylène glycol, le néopentyl glycol), de triols (tels que par exemple le glycérol, le triméthylolpropane, l'hexane-1,2,6-triol), ou de tétrols (tel que par exemple le pentaérythritol). Les polyéther polyols peuvent être obtenus par polymérisation de l'oxyde d'alkylène correspondant en présence d'un catalyseur.

De préférence, les polyéther polyols sont des polypropylène glycols (ou PPG), ayant en particulier une fonctionnalité hydroxyle égale à 2 ou 3, et de préférence un indice de polymolécularité allant de 1 à 1,6, de préférence de 1 à 1,4.

Dans le cadre de l'invention, on entend par « indice de polymolécularité », le rapport entre la masse moléculaire moyenne en poids et la masse moléculaire moyenne en nombre, déterminé notamment par CPG.

Parmi les polypropylène glycols ayant une fonctionnalité hydroxyle égale à 2, on peut citer :

- le VORANOL ® EP 1900 : PPG difonctionnel de masse moléculaire moyenne en nombre d'environ 4 008 g/mol, et d'indice hydroxyle $I_{OH}$ égal à 28 mg KOH/g ;
- l'ACCLAIM ® 8200: PPG difonctionnel de masse moléculaire moyenne en nombre de 8 016 g/mol, et d'indice hydroxyle $I_{OH}$ égal à 14 mg KOH/g ;
- l'ACCLAIM ® 12200: PPG difonctionnel de masse moléculaire moyenne en nombre de 11 222 g/mol, et d'indice hydroxyle $I_{OH}$ égal à 10 mg KOH/g ;
- l'ACCLAIM ® 18200 : PPG difonctionnel de masse moléculaire moyenne en nombre de 17 265 g/mol, et d'indice hydroxyle $I_{OH}$ égal à 6,5 mg KOH/g.

Parmi les polypropylène glycols ayant une fonctionnalité hydroxyle égale à 3, on peut citer :

- le VORANOL ® CP 755 : PPG trifonctionnel de masse moléculaire moyenne en nombre d'environ 710 g/mol, et d'indice hydroxyle $I_{OH}$ égal à 237 mg KOH/g ;
- le VORANOL ® CP 3355 : PPG trifonctionnel de masse moléculaire moyenne en nombre d'environ 3544 g/mol, et d'indice hydroxyle $I_{OH}$ égal à 47,5 mg KOH/g ;
- l'ACCLAIM ® 6300: PPG trifonctionnel de masse moléculaire moyenne en nombre d'environ 5 948 g/mol, et d'indice hydroxyle $I_{OH}$ égal à 28,3 mg KOH/g.

Dans le cadre de l'invention, on entend par « fonctionnalité hydroxyle d'un polyéther polyol», le nombre moyen de fonction hydroxyle par mole de polyéther polyol.

Selon un mode de réalisation préféré, les polyéther polyols ont une fonctionnalité égale à 2, et une masse moléculaire moyenne en nombre allant de préférence de 3 000 à 20 000 g/mol, préférentiellement de 4 000 à 19 000 g/mol, en particulier de 5 000 à 15 000 g/mol, et avantageusement de 7 000 à 13 000 g/mol.

Selon un mode de réalisation préféré, les polyéther polyols ont une fonctionnalité égale à 3, et une masse moléculaire moyenne en nombre allant de préférence de 500 à 20 000 g/mol, préférentiellement de 500 à 10 000 g/mol, en particulier de 500 à 5 000 g/mol, et avantageusement de 500 à 4 000 g/mol.

**Organosilanes (E1-2) :**

Selon un mode de réalisation, le composé (E1) est choisi parmi les organosilanes, en particulier choisi dans le groupe constitué des aminosilanes, des mercaptosilanes, des glycidoxysilanes, des vinylsilanes, des époxy silanes, des (méth)acrylate silanes, des glycoxysilanes, des anhydro silanes, et de leurs mélanges.
Dans le cadre de l'invention, on entend par « organosilane », un composé comprenant un groupe organique lié à l'atome Si par le biais d'une liaison Si-C.
De préférence, les organosilanes comprennent au moins un, de préférence au moins deux voire trois, groupement(s) alcoxy relié(s) à l'atome Si par le biais de liaison(s) Si-O.
Les organosilanes peuvent être des monomères ou des oligomères.
Parmi les organosilanes, on peut par exemple citer le 3-aminopropyl méthyl diméthoxysilane, le 3-aminopropyl triméthoxysilane (par exemple disponible sous la dénomination SILQUEST ® A1110 auprès de la société MOMENTIVE), le 3-glycidoxypropyl triméthoxysilane (par exemple disponible sous la dénomination SILQUEST ® A-187 auprès de la société MOMENTIVE), le 3-mercaptopropyl triméthoxysilane (par exemple disponible sous la dénomination SILQUEST ® A-189 auprès de la société MOMENTIVE), le mercaptopropyltriéthoxysilane, le mercaptopropylméthyldiméthoxysilane, le mercaptopropylméthyldiéthoxysilane, le mercaptométhyltriméthoxysilane, le mercaptométhyltriéthoxysilane, le N-aminoéthyl-3-aminopropyl triméthoxysilane, le 3-méthacryloxypropyltriméthoxysilane (par exemple disponible sous la dénomination SILQUEST ® A-174NT auprès de la société MOMENTIVE), tris-(3-triméthoxysilylpropyl) isocyanurate (par exemple disponible sous la dénomination SILQUEST ® Y-11597 auprès de la société MOMENTIVE), le bis-(3-triéthoxysilylpropyl)polysulfide (par exemple disponible sous la dénomination SILQUEST ® A-1289 auprès de la société MOMENTIVE), le bis-(3-triéthoxysilyl)disulfide (par exemple disponible sous la dénomination SILQUEST ® A-1589 auprès de la société MOMENTIVE), le béta-(3,4-epoxycyclohexyl)éthyltriméthoxysilane (par exemple disponible sous la dénomination SILQUEST ® A-186 auprès de la société MOMENTIVE), le bis(triéthoxysilyl)éthane (par exemple disponible sous la dénomination SILQUEST ® Y-9805 auprès de la société MOMENTIVE), le gamma-isocyanatopropyltrimethoxysilane (par exemple disponible sous la dénomination SILQUEST ® A-LINK 35 auprès de la société MOMENTIVE), le (méthacryloxyméthyl)tri(m)éthoxysilane (par exemple disponibles sous les dénominations GENIOSIL ® XL 33, ou GENIOSIL ® XL 36 auprès de la société WACKER), le (méthacryloxyméthyl)(m)éthyldimethoxysilane (par exemple disponibles sous les dénominations GENIOSIL ® XL 32, ou GENIOSIL ® XL34 auprès de la société WACKER), l'(isocyanatométhyl)méthyldiméthoxysilane (par exemple disponible sous la dénomination GENIOSIL ® XL 42 auprès de la société WACKER), l'(isocyanatométhyl)triméthoxysilane (par exemple disponible sous la dénomination GENIOSIL ® XL 43 auprès de la société WACKER), le (méthacryloxyméthyl)méthyldiéthoxysilane, le 2-acryloxyéthylméthyldiméthoxysilane, le 2-méthacryloxyéthyltriméthoxysilane, le 3-acryloxypropylméthyldiméthoxysilane, le 2-acryloxyéthyltriméthoxysilane, le 2-méthacryloxyéthyltriéthoxysilane, le 3-acryloxypropyltriméthoxysilane, le 3-acryloxypropyltripropoxysilane, le 3-méthacryloxypropyltriéthoxysilane, le 3-méthacryloxypropyltriacétoxysilane, le 3-méthacryloxypropylméthyldiméthoxysilane, le glycoxysilane issu de la réaction entre le 2-méthyl-1,3-propanediol et le vinyl triméthoxysilane, et leurs mélanges.

**Résines tackifiantes (E1-3)** :

Selon un mode de réalisation, le composé (E1) est choisi parmi les résines tackifiantes ayant en particulier une masse moléculaire moyenne en nombre allant de 100 g/mol à 6 000 g/mol, de préférence de 300 g/mol à 4 000 g/mol.
La résine tackifiante peut par exemple être toute résine tackifiante telle que définie pour la résine tackifiante (B).

**Esters de polyol (E1-4)** :

Selon un mode de réalisation, le composé (E1) est choisi parmi les esters de polyol. Les esters de polyol peuvent être préparés par exemple par réaction d'estérification de polyol, par exemple de tétrol, tel que par exemple le pentaérythritol.
A titre d'ester de polyol, on peut par exemple citer le tétravalérate de pentaérythritol.

**Polymères mono- ou disilylés (E1-5)** :

Selon un mode de réalisation, le composé (E1) est choisi parmi les polymères monosilylés, les polymères disilylés et leurs mélanges.
Les polymères disilylés peuvent être tous ceux cités précédemment pour la définition du polymère silylé (A), en particulier les polymères de formules (II'), (III') ou (IV') susmentionnées.
De préférence, les polymères monosilylés comprennent un groupe de formule (I) susmentionnée.

**Polyétheramines (E1-6) :**

Dans le cadre de l'invention, et sauf mention contraire, on entend par « polyétheramines », des composés comprenant une chaîne principale polyéther, et au moins une fonction amine (voire au moins deux fonctions amine).
Selon un mode de réalisation, le composé (E1) est choisi parmi les polyétheramines.
Parmi les polyétheramines, on peut en particulier citer les JEFFAMINE commercialisées par la société HUNTSMAN, tel que par exemple la polyétherdiamine de formule : $H_2N-CH_2-CH_2-O-CH_2-CH_2-O-CH_2-CH_2-NH_2$ ayant une alcalinité primaire de 13,49 méq/g (disponible par exemple sous la dénomination commerciale JEFFAMINE® ED 148 auprès de la société HUNTSMAN).

**II.2.1.2 Composé (E2) :**

Le composé (E) compris dans la composition V peut être également un composé (E2) (désigné par les termes de "diluant non réactif") ayant une tension de vapeur à 20°C ou égale à 0,08 kPa.
Le composé (E2) a de préférence une tension de vapeur à 20°C comprise entre 0,08 kPa et 13 kPa, préférentiellement entre 0,08 kPa et 8 kPa, encore plus préférentiellement entre 0,1 kPa et 5 kPa.
Le composé (E2) est choisi parmi les alcools, par exemple parmi l'isopropanol, l'isobutanol, le butanol, le méthanol, le 2-butoxyéthanol, et leurs mélanges.
Avantageusement, le composé (E2) est évaporé lors de l'application de la composition adhésive sur une couche support.
Selon un mode de réalisation préféré, lorsque le catalyseur de réticulation inclus dans la composition V est un dérivé d'acide tel que décrit ci-dessus, le composé (E) est un composé (E1).
Selon un mode de réalisation préféré, lorsque le catalyseur de réticulation n'est pas un dérivé d'acide tel que décrit ci-dessus, le composé (E) est un composé (E1) ou (E2).
De préférence, lorsque le catalyseur est un acide inorganique, tel que par exemple l'acide orthophosphorique, le composé (E) n'est pas choisi parmi les polyols.

**II.2.2. Teneur pondérale des ingrédients de la composition V :**

Lorsqu'elle ne comprend pas la résine silsesquioxane (C), la composition V comprend généralement :

- de 0,01% à 95% en poids du (ou des) catalyseur de réticulation (D), de préférence de 1% à 90%, préférentiellement de 5% à 90%, plus préférentiellement de 10% à 80%, encore plus préférentiellement de 10% à 70%, avantageusement de 20% à 60%, en particulier de 20% à 50% ; et
- de 5% à 99,99% en poids du (ou des) composé (E), de préférence de 10% à 99%, par exemple de 10% à 95%, préférentiellement de 20% à 90%, encore plus préférentiellement de 30% à 80%, avantageusement de 40% à 70% ;

ces pourcentages en poids étant indiqués sur la base du poids total de la composition V.
Lorsque la composition V comprend également la résine silsesquioxane (C), les teneurs en ingrédients de ladite composition V peuvent alors varier :

- de 0,01% à 95% en poids du (ou des) catalyseur de réticulation (D), de préférence de 1% à 90%, préférentiellement de 5% à 90%, plus préférentiellement de 10% à 80%, encore plus préférentiellement de 10% à 70%, avantageusement de 20% à 60%, en particulier de 20% à 50% ;
- de 0 % à 99,99% en poids du (ou des) composé (E), de préférence de 10% à 99%, par exemple de 10% à 95%, préférentiellement de 20% à 90%, encore plus préférentiellement de 30% à 80%, avantageusement de 40% à 70% ; et
- de 0.1% à 99,99% en poids de la résine (C), de préférence de 2% à 99%, par exemple de 10% à 95%, préférentiellement de 20% à 90%, encore plus préférentiellement de 30% à 80%, avantageusement de 40% à 85% ;

ces pourcentages en poids étant indiqués sur la base du poids total de la composition V.
Dans le cadre de l'invention, et sauf mention contraire, la teneur massique en catalyseur est la teneur en matière sèche (dite matière active).
De préférence, lorsque le catalyseur (D) est choisi parmi les composés organo-métalliques, la teneur en catalyseur dans la composition V va de 15% à 90%, de préférence de 30% à 60%, avantageusement de 45% à 55% en poids par rapport au poids total de la composition V.
De préférence, lorsque le catalyseur (D) est choisi parmi les acides, et notamment les acides inorganiques, la teneur en catalyseur dans la composition V va de 2% à 60%, de préférence de 5% à 50%, en particulier de 5% à 30%, avantageusement de 5% à 20% en poids par rapport au poids total de la composition V.

De préférence, lorsque le catalyseur (D) est choisi parmi les dérivés d'acides, et notamment les sels d'ammonium d'acides sulfoniques ou les sels d'ammonium d'organophosphates acides, la teneur en catalyseur dans la composition V va de 5% à 60%, de préférence de 10% à 50%, avantageusement de 15% à 40%, en particulier de 20% à 30% en poids par rapport au poids total de la composition V.
Selon un mode de réalisation, le ratio catalyseur(s) de réticulation (D) : composé(s) (E) dans la composition B va de 0,01 : 99,99 à 95 : 5, de préférence de 5 : 95 à 95 : 5, en particulier de 5 : 95 à 60 : 40, préférentiellement de 10 : 90 à 50 : 50, avantageusement de 20 : 80 à 50 : 50.

**II.2.3. Additifs optionnels compris dans la composition V :**

La composition V peut comprendre de l'eau. L'eau peut provenir des composés de la composition V, et/ou peut être ajoutée à la composition V.
La teneur en eau dans la composition V peut varier de 0,05% à 50% en masse, de préférence de 0,1% à 30% en masse, préférentiellement de 0,5% à 15% en masse, avantageusement de 0,5% à 10% en masse, en particulier de 0,5% à 5% en masse par rapport à la masse totale de la composition V.
Selon un mode de réalisation, la composition V comprend de l'eau, en particulier lorsque le composé (E) comprend au moins un composé (E1) qui n'est pas un organosilane ni un polymère mono- ou disilylé.
Selon un mode de réalisation, la composition V comprend de l'eau, en particulier lorsque le composé (E) est un composé (E2).
Selon un mode de réalisation, la composition V est exempte d'eau. Par « exempte d'eau », on entend une teneur en eau inférieure ou égale à 200 ppm, de préférence inférieure ou égale à 100 pm, par exemple inférieure ou égale à 50 ppm, voire inférieure ou égale à 20 ppm. De préférence, la composition V est exempte d'eau, lorsque le composé (E) comprend au moins un composé (E1) choisi parmi les organosilanes, les polymère mono- ou disilylés, et leurs mélanges.
La teneur en eau peut par exemple être mesurée par un dosage Karl Fisher selon la norme ISO 760.
L'eau contenue dans la composition V peut être sous forme liquide ou gazeuse, ou encapsulée, ou absorbée, ou contenue dans la structure chimique d'un composant qui peut la rendre libre et disponible ultérieurement.
L'eau peut être issue d'un ou plusieurs composants de ladite composition V.
La composition V peut comprendre au moins un additif choisi dans le groupe mentionné précédemment et constitué des absorbeurs d'humidité, des plastifiants, des antioxydants, des pigments, des colorants, des promoteurs d'adhérence, des stabilisants UV et des charges.
La composition V peut contenir un composé choisi parmi $NH_4F$, $Bu_4NF$, HF, $BF_3$, $Et_2NSF_3$, $HSO_3F$, un polymère de type polyéther polyol PPG comprenant au moins un groupe fluoré, un composé possédant au moins une liaison Si-F, et leurs mélanges.
La composition V peut être préparée par mélange de l'ensemble des composants de ladite composition, quel que soit l'ordre d'incorporation des différents composants. Plusieurs composants de la composition V peuvent être mélangés ensemble, puis mélangés ensuite avec d'autre(s) composant(s) de ladite composition V.
Le mélange peut être réalisé à une température allant de 23°C à 200°C.

**II.2.4. Propriétés de la composition V** :

Selon un mode de réalisation, la composition V a une viscosité à 23°C qui va de 3 mPa.s à 50 000 mPa.s, de préférence de 600 mPa.s à 25 000 mPa.s, préférentiellement de 800 mPa.s à 16 000 mPa.s, avantageusement de 1 000 mPa.s à 5 000 mPa.s, par exemple de 1 100 mPa.s à 2 000 mPa.s, en particulier de 1200 mPa.s à 1 500 mPa.s.
Selon un mode de réalisation, la composition V a une viscosité à une température variant de 40°C à 160°C, préférablement de 60°C à 100°C, qui va de 50 mPa.s à 500 000 mPa.s, de préférence de 600 mPa.s à 100 000 mPa.s, préférentiellement de 1 200 mPa.s à 50 000 mPa.s, avantageusement de 1 200 mPa.s à 10 000 mPa.s, par exemple de 1 200 mPa.s à 5 000 mPa.s.
Les constituants de la composition V sont de préférence choisis de sorte que la composition V est avantageusement stable dans le temps. De préférence, la composition V est telle que le ratio

$$(V_{\mathbf{final}} - V_{\mathbf{initial}})/V_{\mathrm{initial}}$$

est inférieur ou égal à 30%, de préférence inférieur ou égal à 20%, préférentiellement inférieur ou égal à 10%, avec :

- $V_{final}$ étant la viscosité de la composition V après chauffage à 40 °C pendant 28 jours, mesurée à 23°C ;
- $V_{initial}$ étant la viscosité de la composition V avant ledit chauffage, mesurée à 23°C.

Le catalyseur de réticulation (D) est avantageusement choisi de sorte à être soluble dans le(s) composé(s) (E)

(et, le cas échéant, (C) ) susmentionné(s), pour former avantageusement une composition V homogène, notamment lors du stockage à 23°C ou après le chauffage à 40°C pendant 28 jours. Par homogène, on entend le fait qu'il n'y ait pas de déphasage (floculation ou sédimentation) entre le(s) catalyseur(s) et le(s) composé(s) C dans la composition V.

**II.3. Autres caractéristiques de la composition adhésive multicomposante** :

Selon une variante préférée de ladite composition adhésive multicomposante, le poids de composition V divisé par poids total de ladite composition adhésive multicomposante, de préférence bicomposante, va de 0,02 à 40 %, de préférence de 0,05 à 40 %, préférentiellement de 0,05 à 20, plus préférentiellement de 0,05 à 10%, et encore plus préférentiellement de 0,05 à 5%.

Le catalyseur compris dans la composition adhésive multicomposante est le catalyseur de réticulation (D) inclus dans la composition V.

La teneur totale en catalyseur de réticulation (D) dans la composition adhésive multicomposante, et de préférence bicomposante, selon l'invention peut aller de 0,01% à 10%, de préférence de 0,01% à 5%, préférentiellement de 0,05% à 4%, avantageusement de 0,1% à 3%, en particulier de 0,5% à 2%, en poids, par rapport au poids total de ladite composition adhésive bicomposante.

Selon un mode de réalisation, lorsque le catalyseur de réticulation (D) est choisi parmi les acides et leurs dérivés, sa teneur totale dans la composition adhésive multicomposante, de préférence bicomposante, est inférieure ou égale à 1%, de préférence inférieure ou égale à 0,5%, avantageusement inférieure ou égale à 0,2%, préférentiellement inférieure ou égale à 0,1%, voire inférieure ou égale à 0,05%, par rapport au poids total de ladite composition.

De préférence, la composition adhésive selon l'invention est conditionnée dans un kit comprenant au moins deux compartiments séparés, à savoir un premier compartiment pour la composition U, et un second compartiment pour la composition V, et éventuellement d'autre(s) compartiment(s) pour des compositions additionnelles.

**Kit :**

La présente invention concerne également un kit comprenant au moins la composition U et la composition V susmentionnées dans deux compartiments séparés. Les compartiments peuvent par exemple être des fûts, des cartouches, des saches. Lorsque la composition adhésive multicomposante comprend d'autres compositions, celles-ci sont contenus d'autres compartiments du kit.

**Article auto-adhésif :**

La présente invention a également pour objet un article auto-adhésif comprenant une couche support revêtue d'une couche auto-adhésive, caractérisé en ce que ladite couche auto-adhésive est constituée de la composition adhésive selon l'invention à l'état réticulé.

Au sens de la présente invention, le terme « article auto-adhésif » inclut tout article qui peut être collé sur une surface seulement par l'action d'une pression avec la main ou un équipement, sans l'utilisation de colles ou adhésifs supplémentaires.

L'article auto-adhésif est un article auto-adhésif sensible à la pression.

La couche support revêtue d'une couche auto-adhésive est également désignée par les termes de "support auto-adhésif".

Ces articles ont notamment pour but d'être appliqués sur une surface à coller afin de rapprocher, de maintenir, de fixer, ou simplement d'immobiliser, d'exposer des formes, logos, images ou informations. Ces articles peuvent être utilisés dans de nombreux domaines, tels que le domaine médical, l'habillement, l'emballage, l'automobile (par exemple pour la pose de logos, le lettrage, l'insonorisation intérieure, l'habillage intérieur, les collages dans l'habitacle) ou la construction (par exemple pour l'isolation phonique et thermique, l'assemblage de fenêtres). Ils peuvent être façonnés en fonction de leur application finale, par exemple sous la forme de rubans, tels que les rubans à usage industriel, les rubans de bricolage ou à usage de fixation sur chantiers, les rubans simple ou double face, ou sous la forme d'étiquettes, de bandages, de pansements, de patchs ou de films graphiques.

Selon un mode de réalisation, l'article auto-adhésif est un système multicouche auto-adhésif, et en particulier une étiquette ou un ruban auto-adhésif, pouvant être à simple ou double face.

Le matériau utilisable pour la couche support peut par exemple être tout type de support rigide ou souple. On peut par exemple citer les supports de type mousses, feutrines, supports non tissés, plastiques, membranes, les papiers ou un film d'un matériau polymère à une ou plusieurs couches, notamment un papier ou film plastique protecteur anti-adhérent.

La couche support est en matériau par exemple choisi parmi les polyoléfines, telles que le polyéthylène, dont le polyéthylène haute densité, le polyéthylène faible densité, le polyéthylène faible densité linéaire et le polyéthylène ultra faible densité linéaire, le polypropylène et les polybutylènes ; le polystyrène ; le caoutchouc naturel ou synthétique ; les

copolymères vinyliques, tels que le polychlorure de vinyle, plastifié ou non plastifié, et les poly(acétate de vinyle) ; les copolymères oléfiniques, tels que les copolymères éthylène/méthacrylate, les copolymères éthylène/acétate de vinyle, les copolymères acrylonitrile/butadiène/styrène, et les copolymères éthylène/propylène ; les polymères et les copolymères acryliques ; les polyuréthanes ; les polyéthers ; les polyesters ; et les mélanges de ceux-ci. De préférence, la couche support est à base de polymères acryliques, de Polyéthylène (PE), Polypropylène (PP) orienté, non orienté ou bi-orienté, Polyimide, Polyuréthane, Polyester tel que le Polyéthylène téréphtalate (PET), ou de papier.

Selon un mode de réalisation, l'article auto-adhésif obtenu à partir de la composition adhésive selon l'invention comprend une couche support permanente revêtue d'une couche adhésive. De préférence, la couche adhésive est en outre revêtue d'un film plastique ou papier protecteur anti-adhérent, de préférence siliconé.

Selon un autre mode de réalisation, l'article auto-adhésif obtenu à partir de la composition adhésive selon l'invention comprend une couche support non permanente qui est constituée d'un premier film plastique ou papier protecteur anti-adhérent, de préférence siliconé, ladite couche étant revêtue d'une couche adhésive, elle-même pouvant également être revêtue d'un second film plastique ou papier protecteur anti-adhérent. Ce mode de réalisation est particulièrement adapté à l'assemblage par collage de fenêtres, plus particulièrement à l'assemblage du panneau rigide constitué du double ou triple vitrage avec le chassis de la fenêtre. Selon ce mode de réalisation, ladite couche support non permanente est destinée à être enlevée par l'utilisateur au moment de la mise en œuvre de l'article auto-adhésif en vue de l'assemblage de la fenêtre.

A titre d'alternative au film protecteur anti-adhérent, la face arrière de la couche support permanente qui n'est pas revêtue de la couche adhésive, peut avoir une surface anti-adhérente, par exemple une couche protectrice siliconée.

Selon un autre mode de réalisation, la couche support permanente est revêtue sur ses deux faces par une composition adhésive, qui peut être identique ou différente, au moins une des deux compositions adhésives étant selon l'invention, conduisant avantageusement à la fabrication de rubans dits double face

De préférence, la couche support présente une épaisseur allant de 10 microns à 50 mm, de préférence encore allant de 10 microns à 20 mm, de préférence allant de 20 microns à 10 mm, de préférence encore allant de 20 microns à 1 mm.

Dans certains cas spécifiques, il est nécessaire de procéder à un traitement de surface de la couche support pour augmenter l'accroche de la couche adhésive lors de l'étape d'enduction sur celle-ci.

L'article auto-adhésif selon l'invention peut ainsi coller deux substrats. Le substrat sur lequel l'article auto-adhésif est destiné à être appliqué (désigné par « substrat à coller ») peut être flexible ou rigide. En particulier, il peut présenter les mêmes propriétés de flexibilité que la couche support décrite ci-dessus, de manière à être enroulé et conditionné sous la forme d'une bobine, par exemple telle que décrite précédemment.

Alternativement, le substrat à coller peut être rigide. Dans ce cas, le substrat ne peut être enroulé et conditionné sous la forme d'une bobine, par exemple telle que décrite précédemment. Le substrat à coller peut par exemple être choisi parmi le béton, le papier, les substrats de type polyoléfines, le verre, la céramique et les métaux, notamment l'aluminium.

La couche auto-adhésive, qui est constituée de la composition adhésive selon l'invention à l'état réticulé, et qui recouvre la couche support, dans l'article auto-adhésif selon l'invention peut avoir une épaisseur très variable, allant de 10 $\mu$m à 5000 $\mu$m, de préférence.

Une épaisseur allant de 10 $\mu$m à 100 $\mu$m, de préférence de 20 à 50 $\mu$m est plus particulièrement préférée dans le cas des étiquettes auto-adhésives ; tandis qu'une épaisseur allant dans un domaine beaucoup plus large de de 3 à 5000 $\mu$m peut être rencontrée pour les rubans auto-adhésifs.

Selon un mode de réalisation, l'article auto-adhésif comprend en outre une couche anti-adhérente protectrice (« release liner » en anglais).

Selon un mode de réalisation, ladite couche anti-adhérente est appliquée sur la couche adhésive, après réticulation de la composition adhésive.

La couche support peut être recouverte sur une de ses deux faces, la face arrière qui n'est pas revêtue de la couche adhésive, par une couche protectrice anti-adhérente, par exemple par un film siliconé. De cette façon, l'article auto-adhésif peut être enroulé sur lui-même puis déroulé sans problème grâce à l'absence d'adhésion de la couche adhésive sur la face siliconée.

**Procédé de fabrication de l'article auto-adhésif :**

La présente invention a également pour objet un procédé de fabrication de l'article auto-adhésif tel que défini précédemment, ledit procédé étant caractérisé en ce qu'il comprend:

- (a) le préchauffage à une température comprise entre 40 et 130°C de la composition adhésive réticulable à chaud, telle que définie précédemment ;
- (b) l'application de ladite composition par enduction sur une surface porteuse ;
- (c) la réticulation de ladite composition, par chauffage à une température allant de 50 à 200°C ; puis

- (d) le contre collage ou le transfert de la couche de composition adhésive réticulée sur une couche support ou sur un film protecteur anti-adhérent.

Lorsque la composition adhésive réticulable à chaud est, conformément au premier mode de réalisation décrit au point I., une composition monocomposante, c'est ladite composition monocomposante qui est, conformément à l'étape (a), préchauffée puis conformément à l'étape (b), appliquée sur la surface porteuse, et enfin, conformément à l'étape (c), réticulée.

Lorsque la composition adhésive réticulable à chaud est, conformément au deuxième mode de réalisation décrit au point II., une composition multicomposante, et de préférence bicomposante, le préchauffage conformément à l'étape (a) porte sur chacune des composantes de ladite composition.

De préférence, le préchauffage porte sur chacune des 2 compositions U et V de la composition bicomposante.

L'étape (a) de préchauffage est alors suivie, d'une étape (a') de mélange des compositions U et V à une température allant de 40 à 130 °C, la composition résultant du mélange formé étant alors appliquée, conformément à l'étape (b) sur la surface porteuse, puis réticulée conformément à l'étape (c).

Par « surface porteuse » au sens de la présente invention, il faut comprendre soit un convoyeur à bande recouvert d'une couche anti-adhérente, soit un film protecteur anti-adhérent (« release liner » en anglais), soit une couche support.

Dans le cas où la surface porteuse est un film protecteur anti-adhérent, le procédé de fabrication de l'article auto-adhésif selon l'invention peut comprendre l'étape (d) de transfert de la couche adhésive réticulée sur une couche support.

Dans le cas où la surface porteuse est une couche support ou un film protecteur anti-adhérent, le procédé de fabrication de l'article auto-adhésif selon l'invention peut encore comprendre l'étape (d) de contre collage de la couche adhésive sur un film protecteur anti-adhérent.

Selon une variante préférée de l'invention, l'étape (d) du procédé sus-décrit consiste en un transfert de la couche adhésive réticulée sur une couche support souple (pouvant être un film plastique) après refroidissement de la couche adhésive réticulée à une température inférieure à la température de dégradation ou de ramollissement du matériau composant la couche support.

Selon un mode de réalisation, le procédé de fabrication de l'article auto-adhésif selon l'invention comprend en outre une étape (e) d'enduction d'une seconde couche de composition adhésive selon l'invention sur la couche support suivie d'une étape (f) de réticulation de la composition adhésive enduite à l'étape (e) par chauffage à une température allant de 20 à 200°C. Selon ce mode de réalisation, un article auto-adhésif double face est obtenu.

L'étape (b) d'enduction peut être réalisée au moyen de dispositifs d'enduction connus, comme par exemple une buse à lèvre ou de type rideau, ou encore au rouleau. Elle met en œuvre un grammage de composition adhésive allant de 10 g/$m^2$ à 5000g/$m^2$.

Le grammage de composition adhésive nécessaire pour la fabrication d'étiquettes auto-adhésives peut aller de 10 à 100 g/$m^2$, de préférence de 20 à 50 g/$m^2$. Celui nécessaire pour la fabrication de rubans auto-adhésifs peut varier dans un domaine beaucoup plus large allant de 3 à 5000 g/$m^2$, de préférence de 15 à 250 g/$m^2$ par face.

Selon un mode de réalisation, la composition adhésive enduite est en outre soumise, lors de l'étape (c) à un traitement dans une atmosphère humide caractérisée par son niveau d'humidité et, en particulier, dans un environnement gazeux où des molécules d'eau sont présentes entre 10 et 200 g par $m^3$ de gaz.

De préférence, l'atmosphère humide est une atmosphère dans laquelle de 2 à 100% des molécules sont des molécules d'eau, de préférence de 3 à 50%, de préférence encore de 3 à 10% des molécules sont des molécules d'eau.

Le taux d'humidité est exprimé en pourcentage d'eau par unité de volume, ce qui correspond au nombre de molécules d'eau divisé par le nombre total de molécules dans une unité de volume. Grâce à la nature linéaire de cette échelle, le taux d'humidité est facilement mesuré et contrôlé en utilisant par exemple des moniteurs de type P.I.D (« Proportional-Integral-Derivative »). Le pourcentage en poids peut être calculé en multipliant le pourcentage du nombre de molécules d'eau par rapport au nombre total de molécules par un facteur de 0,622. Des informations générales sur le taux d'humidité dans divers environnements sont décrites par W. Wagner et al., dans "International Steam Tables - Properties of Water and Steam based on the Industrial Formulation IAPWS-IF97".

L'étape de réticulation thermique a notamment pour effet la création - entre les chaînes polymériques à groupe terminal alkoxysilane hydrolysable de la composition adhésive et sous l'action de l'humidité atmosphérique - de liaisons de type siloxane qui conduisent à la formation d'un réseau polymérique tri-dimensionnel. La composition adhésive ainsi réticulée est en particulier un adhésif sensible à la pression qui confère à la couche support qui en est revêtue le pouvoir adhésif et le tack désirables.

De préférence, l'enduction est réalisée uniformément sur la couche support ou sur la couche protectrice anti-adhérente mais l'enduction peut également être adaptée à la forme souhaitée de l'article auto-adhésif final.

Selon un mode de réalisation, l'enduction par la composition adhésive est réalisée sur au moins une partie des deux faces de la couche support. Si les deux faces de la couche support sont enduites, la composition adhésive peut être identique ou différente sur les deux faces, et le grammage peut être identique ou différent sur les deux faces.

Selon un mode de réalisation de l'invention, l'article auto-adhésif comprend une couche adhésive sur au moins une partie d'une face ou sur au moins une partie des deux faces de la couche support, ladite ou lesdites couches adhésives étant éventuellement revêtues d'une couche protectrice anti-adhérente. Selon un mode de réalisation, l'article auto-adhésif comprend deux couches protectrices anti-adhérentes sur chacune des deux couches adhésives. Dans ce cas, les deux couches protectrices peuvent être en matériaux identiques ou différents et/ou elles peuvent avoir une épaisseur identique ou différente.

Selon une variante préférée du procédé de fabrication de l'article auto-adhésif selon l'invention, mettant en œuvre la composition adhésive multicomposante telle que définie précédemment, l'étape (b) d'application par enduction sur la surface porteuse, par exemple sur la couche support (96), est mise en œuvre au moyen d'une installation d'application à chaud (20) de ladite composition adhésive, l'installation comprenant :

- une buse (50) d'application de la composition adhésive multicomposante ;
- une ligne (88a) d'alimentation de la composition U comprise dans la composition adhésive multicomposante à appliquer sous forme fluide ;
- une ligne (66a) d'alimentation de la composition V comprise dans la composition adhésive multicomposante à appliquer sous forme fluide ;
- une ligne (88) d'alimentation de la buse (50) avec la composition adhésive multicomposante à appliquer sous forme fluide ; et
- un mélangeur (30) pour le mélange d'au moins les compositions U et V de la composition adhésive multicomposante ;

ladite étape (b) comprenant :

- l'approvisionnement de la ligne (88a) d'alimentation avec au moins la composition U ;
- l'approvisionnement de la ligne (66a) d'alimentation avec au moins la composition V ;
- le mélange d'au moins la composition U et de la composition V de la composition multicomposante à l'aide d'un mélangeur (30) ; et
- l'application à chaud de la composition adhésive multicomposante mélangée (80) sur une couche support au moyen de la buse d'application (50).

Le mélangeur peut être un mélangeur statique ou un mélangeur dynamique.

De préférence, le mélangeur statique ou dynamique doit pouvoir être régulé en température. De préférence, le mélangeur (30) est un mélangeur dynamique, permettant avantageusement un mélange à fort cisaillement, et l'obtention d'une meilleure homogénéité de la composition adhésive résultante du mélange d'au moins les compositions U et V de la composition multicomposante.

Le mélangeur (30) peut être disposé entre les lignes d'alimentation d'au moins les compositions U (88a) et V (66a), et la ligne d'alimentation (88), et peut permettre le mélange homogène des compositions constituant la composition adhésive multicomposante, notamment bicomposante.

Le procédé selon l'invention comprend le mélange d'au moins la composition U et la composition V de la composition multicomposante à l'aide d'un mélangeur (30). L'étape de mélange peut être un mélange de la composition U avec la composition V, et éventuellement avec une ou plusieurs composition(s) additionnelle(s) de la composition multicomposante.

L'installation peut comprendre des moyens de chauffage (44) aptes à être disposés au niveau d'un réservoir de stockage (82) comprenant la composition U ou la composition V ou une autre composition additionnelle de la composition multicomposante, pour élever ladite composition à une température de pompage, de préférence au moins la composition U est élevée à une température de pompage comprise entre 50°C et 140°C, de préférence comprise entre 80°C et 120°C, plus préférentiellement entre 90°C et 110°C.

De préférence, la composition adhésive multicomposante est appliquée (après mélange d'au moins les compositions U et V) à une température comprise entre 50°C et 140°C, de préférence comprise entre 80°C et 120°C, plus préférentiellement entre 90°C et 110°C.

La figure 1 montre une représentation schématique d'un mode de réalisation d'une installation 20 susceptible de mettre en œuvre le procédé de fabrication de l'article auto-adhésif, selon l'invention.

Selon un mode de réalisation, du fait du au moins double approvisionnement, la composition V (66), est séparée de la composition U (68), jusqu'au mélangeur (30) disposé entre les lignes d'alimentation d'au moins les compositions U (88a) et V (66a) d'une part et de la ligne d'alimentation (88) de la composition adhésive multicomposante à appliquer, d'autre part. En d'autres termes, le mélangeur (30) est en ligne et permet la réalisation d'une étape de mélange homogène des compositions (66) et (68) approvisionnées séparément. L'injection de la composition V (66) dans la composition U (68) est réalisée au niveau du mélangeur (30), tel qu'illustré par exemple sur la figure 1, pour permettre le mélange immédiat de ces compositions.

Les différentes compositions constituant la composition adhésive multicomposante selon l'invention peuvent être séparées totalement, c'est-à-dire que chaque composition est approvisionnée séparément à l'installation d'application à chaud (20). En particulier, l'injection de la composition A (68), de la composition B (66), et d'éventuelle(s) composition(s) additionnelle(s) de la composition adhésive multicomposante, est réalisée au niveau du mélangeur (30).
Dans l'installation selon l'invention, la composition U (68) peut être chauffée dans le réservoir de stockage (82) à l'aide d'un moyen de chauffage (44), sans provoquer la réticulation de la composition U (68) du fait de la séparation de la composition V (66), comprenant au moins le catalyseur de réticulation. Le chauffage dans le réservoir de stockage (82), représenté sous forme de fût, permet en particulier de diminuer la viscosité de la composition U (68), pour faciliter le pompage dans l'installation (20), tel qu'à l'aide d'une pompe (46), avant tout contact avec la composition V (66) séparée.
Ce moyen de chauffage (44) (étant de préférence un plateau chauffant) contribue notamment à la mise en température d'application de la composition U (68). La température d'application correspond notamment à une température où la composition adhésive à appliquer présente une viscosité suffisamment faible pour permettre l'application, autrement dit l'enduction, de la composition adhésive multicomposante mélangée (80) sur la surface (96).
En effet, après le mélange des compositions V (66) et U (68), la composition adhésive multicomposante (80) est constituée et peut être appliquée à chaud sur le support (96) à l'aide d'une buse d'application (50). Une température d'application de la composition adhésive multicomposante (80) peut ainsi correspondre à une température où la viscosité de la composition adhésive multicomposante est inférieure ou égale à 50 Pa.s, de préférence inférieure ou égale à 10 Pa.s. A titre d'exemple, la composition adhésive multicomposante (80) peut présenter une viscosité de 5 $\pm$ 1 Pa.s à une température d'application allant de 60°C à 120°C. A la suite de l'application de la composition adhésive multicomposante (80) sur la surface (96), le support enduit (98) est soumis à une température contrôlée, et éventuellement à un taux d'humidité contrôlé, pour permettre la réticulation de la composition adhésive multicomposante.
La température contrôlée peut être obtenue à l'aide d'un four ou d'une enceinte. La température contrôlée correspond à une température de réticulation de la composition adhésive multicomposante (80) et est par exemple comprise entre 50°C et 200°C, de préférence entre 80°C et 160°C, en particulier entre 100°C et 150°C.
De manière analogue la composition V (66) peut elle aussi être chauffée avant son mélange avec la composition U (68) sans risque de réticulation avant leur mélange. Il en va de même de toute(s) composition(s) de la composition multicomposante selon l'invention.
Le chauffage de l'ensemble des compositions V (66) et U (68) séparées avant leur mélange permet notamment d'amener ces composants à la température d'application sans risque de réticulation avant leur mélange dans le mélangeur (30).
L'article auto-adhésif selon l'invention peut être, enfin, utilisé dans une méthode de collage qui est également objet de l'invention, caractérisée en ce qu'elle comprend les étapes suivantes :

a) le retrait de la couche protectrice anti-adhérente, lorsqu'une telle couche est présente ;
b) l'application de l'article auto-adhésif sur une surface d'un produit; et
c) l'application d'une pression sur ledit article.

A l'étape b), l'article auto-adhésif est appliqué de manière à ce que la partie auto-adhésive de l'article (formée par la couche auto-adhésive) soit face à la surface du produit.
Selon un mode de réalisation dans lequel l'article auto-adhésif est un article double face, la méthode de collage comprend en outre une étape dans laquelle soit une seconde surface d'un produit est appliquée sur l'article collé sur la première surface d'un produit, soit l'article collé sur la première surface d'un produit est appliqué sur une seconde surface d'un produit.
Les exemples suivants sont donnés à titre purement illustratif de l'invention et ne sauraient être interprétés pour en limiter la portée.

**Exemple A (référence)** : Composition adhésive réticulable par chauffage à base du GENIOSIL® STP-E30 sans silsesquioxane

A1. Préparation de la composition :

La composition figurant dans le tableau 1 est préparée en introduisant tout d'abord la résine tackifiante Dertophène® H150 dans un réacteur en verre sous vide et chauffé à environ 160°C. Puis, une fois la résine bien fondue, le GENIOSIL® STP-E30 est ajouté.
Le mélange est agité sous vide durant 15 minutes, puis refroidi à 70°C. Le catalyseur (K-KAT® 5218) est alors introduit. Le mélange est maintenu sous vide et sous agitation durant 10 minutes supplémentaires.

A2. Préparation d'une couche support PET revêtue de la composition réticulée, à raison d'un grammage égal à 60 g/m$^2$ :

On utilise comme couche support une feuille rectangulaire de PolyEthylèneTéréphtalate (PET) d'épaisseur 50 μm et de dimensions 20 cm sur 40 cm.

On préchauffe la composition obtenue au point A1. à une température proche de 100°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 60 g/m$^2$, ce qui représente environ une épaisseur de l'ordre de 60 μm.

La feuille de PET ainsi revêtue est alors placée dans une étuve à 120 °C et sous atmosphère humide (4% d'humidité relative) durant 5 minutes pour réticulation de la composition, puis contrecollée sur une couche anti-adhérente protectrice consistant en une feuille de film siliconé, rectangulaire et de mêmes dimensions.

Le tricouche obtenu est soumis aux 2 tests décrits ci-dessous.

Test de pelage à 180° sur plaque d'acier inoxydable :

Le pouvoir adhésif est évalué par le test de pelage (ou peel) à 180° sur plaque d'acier inoxydable tel que décrit dans la méthode FINAT n° 1, publiée dans le Manuel Technique FINAT 6ème édition, 2001. FINAT est la fédération internationale des fabricants et transformateurs d'étiquettes auto-adhésives. Le principe de ce test est le suivant.

Une éprouvette sous forme de bande rectangulaire (25 mm x 175 mm) est découpée dans le tricouche obtenu précédemment.

Cette éprouvette est, après sa préparation, stockée durant 7 jours à une température de 70°C et dans une atmosphère à 50 % d'humidité. Elle est ensuite fixée sur les 2/3 de sa longueur (après enlèvement de la portion de couche anti-adhérente protectrice correspondante) sur un substrat constitué d'une plaque d'acier inoxydable. L'assemblage obtenu est laissé 20 minutes à température ambiante. Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

Le résultat correspondant est exprimé en N/cm et indiqué dans le tableau 1.

Test d'adhésion instantanée (également dénommé test de la boucle) :
Le pouvoir collant immédiat (ou tack) est évalué par le test d'adhésion instantanée dit de la boucle, décrit dans la méthode FINAT n° 9, dont le principe est le suivant.

Une éprouvette sous forme de bande rectangulaire (25 mm x 175 mm) est découpée dans le tricouche obtenu précédemment. Cette éprouvette est, après sa préparation, stockée durant 7 jours à une température de 70°C et dans une atmosphère à 50 % d'humidité. Après enlèvement de la totalité de la couche anti-adhérente protectrice, les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque.

Le résultat correspondant est exprimé en N/cm$^2$ et est indiqué dans le tableau 1.

A3. Préparation d'une couche support PET avec traitement de surface anti-adhérent et revêtue de la composition réticulée, à raison d'un grammage égal à 500 g/m$^2$ :
On prépare une couche support PET revêtue de la composition réticulée obtenue au point A1. en répétant le protocole du point A2. avec :

- une couche support PET qui a reçu préalablement un traitement de surface anti-adhérent,
- un grammage pour la couche de composition (déposée sur le côté anti-adhérent du support) égal à 500 g/m$^2$ ce qui représente environ une épaisseur de l'ordre de 500 μm pour ladite couche ; et
- un temps de réticulation dans l'étuve de 30 minutes.

Le tricouche obtenu est soumis au test décrit ci-après.

Mesure de la résistance et de l'allongement à la rupture par essai de traction :
Le principe de la mesure consiste à étirer dans une machine de traction, dont la mâchoire mobile se déplace à une vitesse

constante égale à 300 mm/minute, une éprouvette constituée de la composition adhésive réticulée et à enregistrer, au moment où se produit la rupture de l'éprouvette, la force appliquée (en N) ainsi que l'allongement de l'éprouvette ou élongation (en %).

L'éprouvette a pour longueur 9 cm, pour largeur 2,5 cm, pour épaisseur 500 μm et est obtenue par découpe, après avoir enlevé la couche support PET et la couche anti-adhérente protectrice du tricouche obtenu ci-dessus.

Les résultats des mesures obtenues sont indiqués dans le tableau 1.

**Exemples 1 et 2 (selon l'invention)** : Composition adhésive réticulable par chauffage à base du GENIOSIL® STP-E30 avec 5 % et 10 % en poids de silsesquioxane

On répète l'exemple A avec les compositions figurant dans le tableau 1.

Ces compositions sont préparées conformément au protocole A1., sauf que le DOW CORNING® 3074 est introduit en même temps que le catalyseur.

Les résultats des tests de pelage, de tack et de l'essai de traction sont également indiqués dans le tableau 1. S'agissant de l'essai de traction, la rupture de l'éprouvette n'est pas observée dans les conditions de l'essai.

On constate une augmentation significative du peel et du tack, ainsi que de l'élongation et de la résistance à la rupture relativement à l'exemple A de référence.

**Exemple B (référence)** : Composition adhésive réticulable par chauffage à base du GENIOSIL® STP-E30 sans silsesquioxane

On prépare la composition figurant dans le tableau 2 comme indiqué au point A1 de l'exemple A, en remplaçant la résine tackifiante Dertophène® H150 par la résine tackifiante Picco® AR100.

On répète, avec la composition ainsi obtenue, le protocole indiqué au point A2, de manière à préparer une couche support PET revêtue de la composition réticulée à raison d'un grammage égal à 60 g/m$^2$.

Le tricouche obtenu est alors soumis aux 3 tests décrits ci-dessous :

- le test de pelage à 180° sur plaque d'acier inoxydable, mis en œuvre conformément à l'exemple A, sauf que l''éprouvette est, après sa préparation, stockée durant 1 jour à 23°C ;
- le test de pelage à 180° sur plaque de polyéthylène haute densité (ou HDPE), mis en œuvre conformément à l'exemple A, sauf que l'éprouvette est, après sa préparation, stockée durant 1 jour à 23°C et que la plaque d'acier inoxydable utilisée comme substrat est remplacée par une plaque de HDPE ;
- le test de pelage à 180° sur plaque de polypropylène (ou PP), mis en œuvre conformément à l'exemple A, sauf que l'éprouvette est, après sa préparation, stockée durant 1 jour à 23°C et que la plaque d'acier inoxydable utilisée comme substrat est remplacée par une plaque de PP.

Les résultats obtenus sont reportés dans le tableau 2.

**Exemple 3 (selon l'invention)** : Composition adhésive réticulable par chauffage à base du GENIOSIL® STP-E30 avec 5 % en poids de silsesquioxane

On répète l'exemple B avec la composition figurant dans le tableau 2.

Cette composition est préparée conformément au protocole A1., sauf que le DOW CORNING® 3074 est introduit en même temps que le catalyseur.

Les résultats des tests de pelage sont également indiqués dans le tableau 2.

On constate, relativement à l'exemple B de référence, une augmentation significative du peel sur les 3 substrats testés.

**Tableau 1**

| Ingrédient | | Teneur en % poids/poids | | |
|---|---|---|---|---|
| | | **Exemple A** | **Exemple 1** | **Exemple 2** |
| (A) | GENIOSIL® STP-E30 | 52 | 49,4 | 46,7 |
| (B) | Dertophène® H150 | 47 | 44,6 | 42,3 |
| (C) | DOW CORNING® 3074 | - | 5 | 10 |
| (D) | K-KAT ® 5218 | 1 | 1 | 1 |

| | | | |
|---|---|---|---|
| Pelage à 180° (N/cm) | 8,0 | 11,8 | 14,1 |
| Tack ($N/cm^2$) | 5,9 | 9,5 | 9,9 |
| Résistance à la rupture (N) | 16 | pas de rupture | pas de rupture |
| Elongation à la rupture (%) | 823 | > 1000 | > 1000 |

**Tableau 2**

| Ingrédient | | Teneur en % poids/poids | |
|---|---|---|---|
| | | **Exemple B** | **Exemple 3** |
| (A) | GENIOSIL® STP-E30 | 47 | 42,4 |
| (B) | Picco® AR100 | 52 | 51,6 |
| (C) | DOW CORNING® 3074 | - | 5 |
| (D) | K-KAT ® 5218 | 1 | 1 |
| Pelage à 180° sur plaque acier inoxydable (N/cm) | 10,5 | 13,2 | |
| Pelage à 180° sur plaque HDPE (N/cm) | 3,7 | 5,4 | |
| Pelage à 180° sur plaque PP (N/cm) | 9,5 | 11,5 | |

## Revendications

**1.** Composition adhésive réticulable par chauffage, **caractérisée en ce qu'**elle comprend :

- au moins un polymère (A) comprenant un groupe alkoxysilane hydrolysable ;
- au moins une résine tackifiante (B) ;
- au moins une résine silsesquioxane (C) ; et
- au moins un catalyseur de réticulation (D).

**2.** Composition adhésive selon la revendication 1, **caractérisée en ce que** le polymère (A) comprend au moins un, et de préférence au moins deux, groupements hydrolysables de formule (I) :

$$-Si(R^4)_p(OR^5)_{3-p} \qquad (I)$$

dans laquelle :

- $R^4$ représente un radical alkyl linéaire ou ramifié comprenant de 1 à 4 atomes de carbone, avec la possibilité que quand il y a plusieurs radicaux $R^4$, ces derniers soient identiques ou différents ;
- $R^5$ représente un radical alkyl linéaire ou ramifié comprenant de 1 à 4 atomes de carbone, avec la possibilité que quand il y a plusieurs radicaux $R^5$, ces derniers soient identiques ou différents, avec la possibilité que deux groupements $OR^5$ puissent être engagés dans un même cycle ;
- p est un nombre entier égal à 0, 1 ou 2, de préférence égal à 0 ou 1.

**3.** Composition adhésive selon la revendication 2, **caractérisée en ce que** le polymère (A) répond à l'une des formules (II), (III) ou (IV) :

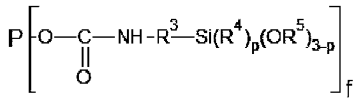

(II)

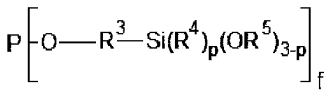

(III)

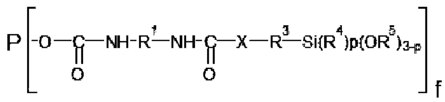

(IV)

dans lesquelles :

- P représente un radical polymérique saturé ou insaturé, linéaire ou ramifié comprenant éventuellement un ou plusieurs hétéroatomes, et présentant une masse molaire en nombre allant de 100 g/mol à 48600 g/mol telle que mesurée par chromatographie d'exclusion stérique en utilisant des étalons de polystyrène,
- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- X représente un radical divalent choisi parmi -NH-, $-NR^7-$ ou -S-,
- $R^7$ représente un radical alkyl linéaire ou ramifié comprenant de 1 à 20 atomes de carbone et pouvant également comprendre un ou plusieurs hétéroatomes, et
- f est un entier allant de 1 à 6.

**4.** Composition adhésive selon la revendication 3, **caractérisée en ce que** le polymère (A) répond à l'une des formules (II'), (III') ou (IV'):

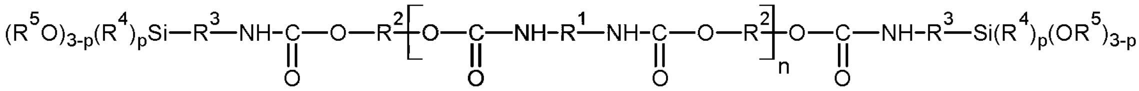

(II')

$$(R^5O)_{3-p}(R^4)_pSi-R^3-O-R^2-O-R^3-Si(R^4)_p(OR^5)_{3-p}$$

(III')

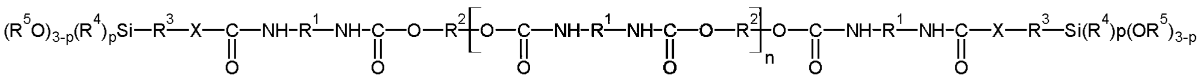

(IV')

dans lesquelles :

- $R^2$ représente un radical divalent hydrocarboné saturé ou insaturé, linéaire ou ramifié comprenant éventuellement un ou plusieurs hétéroatomes, et présentant une masse molaire en nombre allant de 100 g/mol à 48600 g/mol telle que mesurée par chromatographie d'exclusion stérique en utilisant des étalons de polystyrène, et
- n est un entier supérieur ou égal à 0.

**5.** Composition adhésive selon la revendication 3, **caractérisée en ce que** le polymère (A) est un polymère silylé de

formule (III') dans laquelle $R^2$ est un radical divalent dérivé d'un polyéther.

**6.** Composition adhésive selon l'une des revendications 1 à 5, **caractérisée en ce que** la résine (B) est choisie parmi :

- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène, ledit procédé pouvant également comprendre une réaction avec des phénols ;
- (iii) les colophanes d'origine naturelle ou modifiées, (telles que par exemple la colophane extraite de la gomme de pins, la colophane de bois extraite des racines de l'arbre et leurs dérivés hydrogénés, dimérisés, polymérisés ou estérifiés par des monoalcools ou des polyols, comme le glycérol ou le pentaérythritol) ;
- (iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) les résines terpéniques, (qui résultent généralement de la polymérisation d'hydrocarbures terpéniques - comme par exemple le mono-terpène (ou pinène)- en présence de catalyseurs de Friedel-Crafts) ;
- (vi) les copolymères à base de terpènes naturels, (tels que, par exemple, le styrène/terpène, l'alpha-méthyl styrène/terpène et le vinyl toluène/terpène) ; ou bien
- (vii) les résines acryliques ayant une viscosité à 100°C inférieure à 100 Pa.s telle que mesurée selon une méthode Brookfield.

**7.** Composition adhésive selon l'une des revendications 1 à 6, **caractérisée en ce que** la résine silsesquioxane (C) a la formule générale :

$$[RSiO_{3/2}]t$$

dans laquelle R, de nature identique ou différente, représente un radical organique, et t est un nombre entier pouvant varier de 6 à 12.

**8.** Composition adhésive selon la revendication 7, **caractérisée en ce que** la résine silsesquioxane (C) répond à la formule générale (V) :

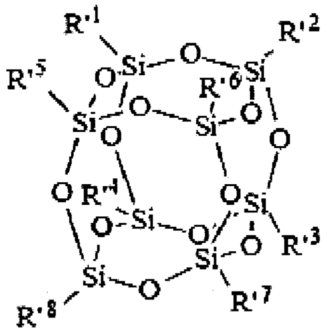

(V)

dans laquelle chacun de $R'^1$ à $R'^8$ représente, indépendamment les uns des autres, un groupe choisi parmi :

- un atome d'hydrogène,
- un radical choisi parmi le groupe constitué d'un radical alcoxy linéaire ou ramifié en C1-C4, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe $-OSiR'^9R'^{10}$ dans lequel $R'^9$ et $R'^{10}$ représente chacun, indépendamment l'un de l'autre, un atome d'hydrogène ou un radical choisi dans le groupe constitué des alkyles linéaires ou ramifiés en C1-C4, des alcoxys linéaires ou ramifiés en C1-C4, des alcényles en C2-C4, d'un phényle, d'un radical allyle en C3-C6, d'un radical

aliphatique cyclique en C3-C8, et d'un radical acyle en C1-C4 ;

à condition :

- qu'au moins un radical parmi les radicaux $R'^1$ à $R'^8$ soit un radical alcoxy en C1-C4; et
- qu'au moins un radical parmi les radicaux $R'^1$ à $R'^8$ soit un radical phényle.

**9.** Composition adhésive selon l'une des revendications 1 à 8, **caractérisée en ce qu'**elle se présente sous la forme d'une composition monocomposante comprenant :

- de 3% à 90% en poids du polymère (A) ;
- de 15% à 80% en poids de la résine tackifiante (B) ;
- de 0,1 à 30% en poids de la résine silsesquioxane ( C ) ; et
- de 0,01% à 10%, du catalyseur de réticulation (D) ;

ces pourcentages en poids étant indiqués sur la base du poids total de la composition monocomposante.

**10.** Composition adhésive selon l'une des revendications 1 à 8, **caractérisée en ce qu'**elle se présente sous la forme d'une composition multicomposante comprenant :

- une composition U comprenant :
  - le polymère (A) ; et
  - la résine tackifiante (B); et
- une composition V comprenant :
  - le catalyseur de réticulation (D) ; et
  - au moins un composé (E) choisi parmi :
    - un composé (E1) ayant une masse moléculaire moyenne en nombre allant de 300 g/mol à 100 000 g/mol telle que mesurée par chromatographie d'exclusion stérique en utilisant des étalons de polystyrène ; et
    - un composé (E2) ayant une tension de vapeur à 20°C supérieure ou égale à 0,08 kPa ;

la résine silsesquioxane (C) étant comprise dans la composition U ou bien dans la composition V.

**11.** Article auto-adhésif comprenant une couche support revêtue d'une couche auto-adhésive, **caractérisé en ce que** ladite couche auto-adhésive est constituée de la composition adhésive, telle que définie dans l'une des revendications 1 à 10, à l'état réticulé.

**12.** Procédé de fabrication de l'article auto-adhésif tel que défini dans la revendication 11, ledit procédé étant **caractérisé en ce qu'**il comprend :

- (a) le préchauffage à une température comprise entre 40 et 130°C de la composition adhésive réticulable à chaud, telle que définie dans l'une des revendications 1 à 10;
- (b) l'application de ladite composition par enduction sur une surface porteuse ;
- (c) la réticulation de ladite composition, par chauffage à une température allant de 50 à 200°C ; puis
- (d) le contre collage ou le transfert de la couche de composition adhésive réticulée sur une couche support ou sur un film protecteur anti-adhérent.

**13.** Procédé selon la revendication 12, **caractérisé en ce qu'**il met en œuvre la composition adhésive multicomposante telle que définie dans la revendication 10 et **en ce que** l'étape (b) d'application par enduction sur la surface porteuse est mise en œuvre au moyen d'une installation d'application à chaud (20) de ladite composition adhésive, l'installation comprenant :

- une buse (50) d'application de la composition adhésive multicomposante ;
- une ligne (88a) d'alimentation de la composition U comprise dans la composition adhésive multicomposante à

appliquer sous forme fluide ;
- une ligne (66a) d'alimentation de la composition V comprise dans la composition adhésive multicomposante à appliquer sous forme fluide ;
- une ligne (88) d'alimentation de la buse (50) avec la composition adhésive multicomposante à appliquer sous forme fluide ; et
- un mélangeur (30) pour le mélange d'au moins les compositions U et V de la composition adhésive multicomposante ;

ladite étape (b) comprenant :

- l'approvisionnement de la ligne (88a) d'alimentation avec au moins la composition U ;
- l'approvisionnement de la ligne (66a) d'alimentation avec au moins la composition V ;
- le mélange d'au moins la composition U et de la composition V de la composition multicomposante à l'aide d'un mélangeur (30) ; et
- l'application à chaud de la composition adhésive multicomposante mélangée (80) sur une couche support au moyen de la buse d'application (50).

**14.** Procédé selon la revendication 13, **caractérisé en ce que** le mélangeur (30) est un mélangeur dynamique.

**15.** Méthode de collage utilisant l'article auto-adhésif adhésif tel que défini dans la revendication 11, **caractérisée en ce qu'**elle comprend les étapes suivantes :

a) le retrait de la couche protectrice anti-adhérente, lorsqu'une telle couche est présente ;
b) l'application de l'article auto-adhésif sur une surface d'un produit; et
c) l'application d'une pression sur ledit article.

**Patentansprüche**

**1.** Durch Erhitzen vernetzbare Klebstoffzusammensetzung, **dadurch gekennzeichnet, dass** sie Folgendes umfasst:

- mindestens ein Polymer (A), das eine hydrolysierbare Alkoxysilangruppe umfasst,
- mindestens ein klebrig machendes Harz (B),
- mindestens ein Silsesquioxan-Harz (C) und
- mindestens einen Vernetzungskatalysator (D).

**2.** Klebstoffzusammensetzung nach Anspruch 1, **dadurch gekennzeichnet, dass** das Polymer (A) mindestens eine und vorzugsweise mindestens zwei hydrolysierbare Gruppen der Formel (I) umfasst:

$$-Si(R^4)_p(OR^5)_{3-p} \qquad (I)$$

worin:

- $R^4$ einen geraden oder verzweigten Alkylrest mit 1 bis 4 Kohlenstoffatomen darstellt, wobei die Möglichkeit besteht, dass, wenn es mehrere Reste $R^4$ gibt, diese gleich oder verschieden sind,
- $R^5$ einen geraden oder verzweigten Alkylrest mit 1 bis 4 Kohlenstoffatomen darstellt, wobei die Möglichkeit besteht, dass, wenn es mehrere Reste $R^5$ gibt, diese gleich oder verschieden sind, mit der Möglichkeit, dass zwei Gruppen $OR^5$ in denselben Ring eingebunden sein können,
- p eine ganze Zahl gleich 0, 1 oder 2, vorzugsweise gleich 0 oder 1 ist.

**3.** Klebstoffzusammensetzung nach Anspruch 2, **dadurch gekennzeichnet, dass** das Polymer (A) einer der Formeln (II), (III) oder (IV) entspricht:

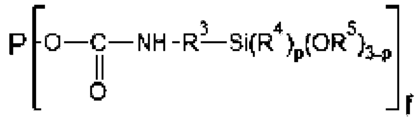

(II)

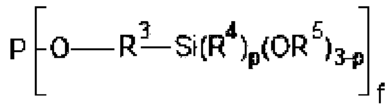

(III)

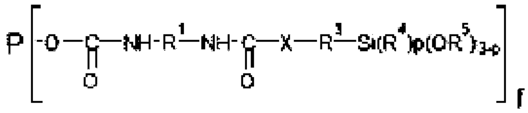

(IV)

,

worin:

- P einen gesättigten oder ungesättigten, geraden oder verzweigten Polymerrest darstellt, der gegebenenfalls ein oder mehrere Heteroatome umfasst und eine zahlenmittlere Molekülmasse im Bereich von 100 g/mol bis 48600 g/mol, wie durch sterische Ausschlusschromatographie unter Verwendung von Polystyrol-Standards gemessen, aufweist,
- $R^1$ einen zweiwertigen Kohlenwasserstoffrest mit 5 bis 15 Kohlenstoffatomen darstellt, der aromatisch oder aliphatisch, gerade, verzweigt oder zyklisch sein kann,
- $R^3$ einen geraden oder verzweigten zweiwertigen Alkylenrest mit 1 bis 6 Kohlenstoffatomen darstellt,
- X einen aus -NH-, -$NR^7$ - oder -S- ausgewählten zweiwertigen Rest darstellt,
- $R^7$ einen geraden oder verzweigten Alkylrest mit 1 bis 20 Kohlenstoffatomen, der außerdem ein oder mehrere Heteroatome enthalten kann, darstellt und
- f eine ganze Zahl von 1 bis 6 ist.

**4.** Klebstoffzusammensetzung nach Anspruch 3, **dadurch gekennzeichnet, dass** das Polymer (A) einer der Formeln (II'), (III') oder (IV') entspricht:

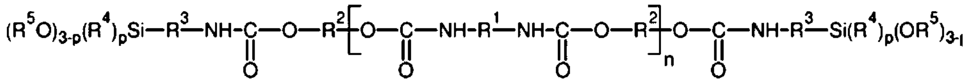

(II')

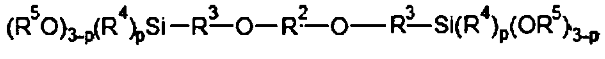

(III')

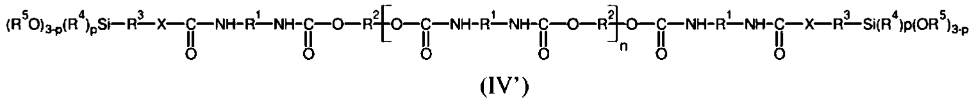

(IV')

,

worin:

- $R^2$ einen gesättigten oder ungesättigten, geraden oder verzweigten zweiwertigen Kohlenwasserstoffrest

darstellt, der gegebenenfalls ein oder mehrere Heteroatome enthält und eine zahlenmittlere Molekülmasse im Bereich von 100 g/mol bis 48600 g/mol, wie durch sterische Ausschlusschromatographie unter Verwendung von Polystyrol-Standards gemessen, aufweist, und
- n eine ganze Zahl größer als oder gleich 0 ist.

**5.** Klebstoffzusammensetzung nach Anspruch 3, **dadurch gekennzeichnet, dass** das Polymer (A) ein silyliertes Polymer der Formel (III') ist, worin $R^2$ ein von einem Polyether stammender zweiwertiger Rest ist.

**6.** Klebstoffzusammensetzung nach einem der Ansprüche 1 bis 5, **dadurch gekennzeichnet, dass** das Harz (B) aus den Folgenden ausgewählt ist:

- (i) Harzen, die durch Polymerisation von Terpenkohlenwasserstoffen und Phenolen in Gegenwart von Friedel-Crafts-Katalysatoren erhalten werden,
- (ii) Harzen, die durch ein Verfahren erhalten werden, das die Polymerisation von alpha-Methylstyrol umfasst, wobei das Verfahren auch eine Reaktion mit Phenolen umfassen kann,
- (iii) Kolophonium natürlichen Ursprungs oder modifiziertem Kolophonium (wie zum Beispiel aus Kiefernharz extrahiertes Kolophonium, aus Baumwurzeln extrahiertes Holzkolophonium und deren hydrierte, dimerisierte, polymerisierte oder mit Monoalkoholen oder Polyolen, wie Glycerin oder Pentaerythrit, veresterte Derivate),
- (iv) Harzen, die durch Hydrierung, Polymerisation oder Copolymerisation (mit einem aromatischen Kohlenwasserstoff) von aus Erdölfraktionen stammenden Gemischen ungesättigter aliphatischer Kohlenwasserstoffe mit etwa 5, 9 oder 10 Kohlenstoffatomen erhalten werden,
- (v) Terpenharzen (die gewöhnlich aus der Polymerisation von Terpenkohlenwasserstoffen - wie beispielsweise Monoterpen (oder Pinen) - in Gegenwart von Friedel-Crafts-Katalysatoren resultieren,
- (vi) Copolymeren auf der Basis natürlicher Terpene (wie zum Beispiel Styrol/Terpen, alpha-Metylstyrol/Terpen und Vinyltoluol/Terpen) oder
- (vii) Acrylharzen mit einer Viskosität bei 100 °C von weniger als 100 Pa.s, wie gemäß einem Brookfield-Verfahren gemessen.

**7.** Klebstoffzusammensetzung nach einem der Ansprüche 1 bis 6, **dadurch gekennzeichnet, dass** das Silsesquioxan-Harz (C) die folgende allgemeine Formel hat:

$$[RSiO_{3/2}]t,$$

worin R, der gleich oder verschieden ist, einen organischen Rest darstellt und t eine ganze Zahl ist, die von 6 bis 12 variieren kann.

**8.** Klebstoffzusammensetzung nach Anspruch 7, **dadurch gekennzeichnet, dass** das Silsesquioxan-Harz (C) der allgemeinen Formel (V) entspricht:

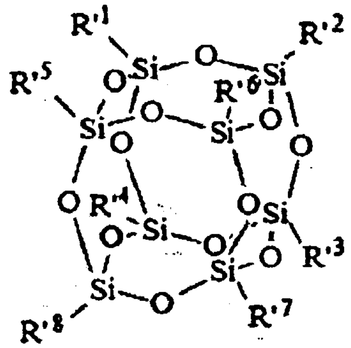

(V)

,

worin $R'^1$ bis $R'^8$ jeweils unabhängig voneinander eine Gruppe darstellen, die aus den Folgenden ausgewählt ist:

- einem Wasserstoffatom,

- einem Rest, der aus der aus einem geraden oder verzweigten C1-C4-Alkoxyrest, einem geraden oder verzweigten Alkylrest mit 1 bis 30 Kohlenstoffatomen, einem Alkenylrest mit 2 bis 30 Kohlenstoffatomen, einem aromatischen Rest mit 6 bis 30 Kohlenstoffatomen, einem Allylrest mit 3 bis 30 Kohlenstoffatomen, einem zyklischen aliphatischen Rest mit 3 bis 30 Kohlenstoffatomen, einem Acylrest mit 1 bis 30 Kohlenstoffatomen bestehenden Gruppe ausgewählt ist, und
- einer Gruppe -OSiR'$^9$R'$^{10}$, wobei R'$^9$ und R'$^{10}$ jeweils unabhängig voneinander ein Wasserstoffatom oder einen Rest darstellen, der aus der aus geraden oder verzweigten C1-C4-Alkylen, geraden oder verzweigten C1-C4-Alkoxys, C2-C4-Alkenylen, einem Phenyl, einem C3-C6-Allylrest, einem zyklischen aliphatischen C3-C8-Rest und einem C1-C4-Acylrest bestehenden Gruppe ausgewählt ist,

unter der Bedingung:

- dass mindestens ein Rest unter den Resten R'$^1$ bis R'$^8$ ein C1-C4-Alkoxyrest ist und
- dass mindestens ein Rest unter den Resten R'$^1$ bis R'$^8$ ein Phenylrest ist.

**9.** Klebstoffzusammensetzung nach einem der Ansprüche 1 bis 8, **dadurch gekennzeichnet, dass** sie in Form einer Einkomponentenzusammensetzung vorliegt, die Folgendes umfasst:

- 3 bis 90 Gew.-% des Polymers (A),
- 15 bis 80 Gew.-% des klebrig machenden Harzes (B),
- 0,1 bis 30 Gew.-% des Silsesquioxan-Harzes (C) und
- 0,01 bis 10 Gew.-% des Vernetzungskatalysators (D),

wobei diese Gewichtsprozentwerte bezogen auf das Gesamtgewicht der Einkomponentenzusammensetzung angegeben sind.

**10.** Klebstoffzusammensetzung nach einem der Ansprüche 1 bis 8, **dadurch gekennzeichnet, dass** sie in Form einer Mehrkomponentenzusammensetzung vorliegt, die Folgendes umfasst:

- eine Zusammensetzung U, umfassend:
  - das Polymer (A) und
  - das klebrig machende Harz (B), und
- eine Zusammensetzung V, umfassend:
  - den Vernetzungskatalysator (D) und
  - mindestens eine Verbindung (E), ausgewählt aus:
    - einer Verbindung (E1) mit einer zahlenmittleren Molekülmasse im Bereich von 300 g/mol bis 100000 g/mol, wie durch sterische Ausschlusschromatographie unter Verwendung von Polystyrol-Standards gemessen, und
    - einer Verbindung (E2) mit einem Dampfdruck bei 20 °C von über oder gleich 0,08 kPa,

wobei das Silsesquioxan-Harz (C) in der Zusammensetzung U oder in der Zusammensetzung V enthalten ist.

**11.** Selbstklebender Gegenstand, umfassend eine Trägerschicht, die mit einer selbstklebenden Schicht beschichtet ist, **dadurch gekennzeichnet, dass** die selbstklebende Schicht aus der Klebstoffzusammensetzung nach einem der Ansprüche 1 bis 10 im vernetzten Zustand besteht.

**12.** Verfahren zur Herstellung des selbstklebenden Gegenstands nach Anspruch 11, wobei das Verfahren **dadurch gekennzeichnet ist, dass** es Folgendes umfasst:

- a) Vorwärmen der wärmevernetzbaren Klebstoffzusammensetzung nach einem der Ansprüche 1 bis 10 bei einer Temperatur zwischen 40 und 130 °C,
- b) Aufbringen der Zusammensetzung durch Beschichten auf eine tragende Oberfläche,
- c) Vernetzen der Zusammensetzung durch Erhitzen bei einer Temperatur im Bereich von 50 bis 200 °C und
- d) Kaschieren oder Übertragen der Schicht aus der vernetzten Klebstoffzusammensetzung auf eine Trägerschicht oder eine Antihaft-Schutzfolie.

**13.** Verfahren nach Anspruch 12, **dadurch gekennzeichnet, dass** es die Mehrkomponentenklebstoffzusammensetzung nach Anspruch 10 einsetzt, und dadurch, dass Schritt (b) des Aufbringens durch Beschichten auf eine tragende Oberfläche mithilfe einer Vorrichtung zum Heißaufbringen (20) der Klebstoffzusammensetzung durchgeführt wird,

wobei die Vorrichtung Folgendes umfasst:

- eine Düse (50) zum Aufbringen der Mehrkomponentenklebstoffzusammensetzung,
- eine Leitung (88a) zum Zuführen der in der aufzubringenden Mehrkomponentenklebstoffzusammensetzung enthaltenen Zusammensetzung U in flüssiger Form,
- eine Leitung (66a) zum Zuführen der in der aufzubringenden Mehrkomponentenklebstoffzusammensetzung enthaltenen Zusammensetzung V in flüssiger Form,
- eine Leitung (88) zum Beschicken der Düse (50) mit der aufzubringenden Mehrkomponentenklebstoffzusammensetzung in flüssiger Form und
- einen Mischer (30) zum Mischen mindestens der Zusammensetzungen U und V der Mehrkomponentenklebstoffzusammensetzung,

wobei Schritt (b) Folgendes umfasst:

- Beschicken der Zuführungsleitung (88a) mit mindestens der Zusammensetzung U,
- Beschicken der Zuführungsleitung (66a) mit mindestens der Zusammensetzung V,
- Mischen von mindestens der Zusammensetzung U und der Zusammensetzung V der Mehrkomponentenzusammensetzung mithilfe eines Mischers (30) und
- Heißaufbringen der gemischten Mehrkomponentenklebstoffzusammensetzung (80) auf eine Trägerschicht mithilfe der Aufbringdüse (50).

**14.** Verfahren nach Anspruch 13, **dadurch gekennzeichnet, dass** der Mischer (30) ein dynamischer Mischer ist.

**15.** Klebeverfahren unter Verwendung des klebenden selbstklebenden Gegenstands nach Anspruch 11, **dadurch gekennzeichnet, dass** es die folgenden Schritte umfasst:

a) Abziehen der Antihaft-Schutzschicht, falls eine solche Schicht vorhanden ist,
b) Aufbringen des selbstklebenden Gegenstands auf eine Oberfläche eines Produkts und
c) Ausüben eines Drucks auf den Gegenstand.

## Claims

**1.** A heat-crosslinkable adhesive composition, **characterized in that** it comprises:

- at least one polymer (A) comprising a hydrolyzable alkoxysilane group;
- at least one tackifying resin (B);
- at least one silsesquioxane resin (C); and
- at least one crosslinking catalyst (D).

**2.** The adhesive composition as claimed in claim 1, **characterized in that** the polymer (A) comprises at least one, and preferably at least two, hydrolyzable groups of formula (I):

$$-Si(R^4)_p(OR^5)_{3-p} \qquad (I)$$

in which:

- $R^4$ represents a linear or branched alkyl radical comprising from 1 to 4 carbon atoms, with the possibility that when there are several radicals $R^4$, these radicals are identical or different;
- $R^5$ represents a linear or branched alkyl radical comprising from 1 to 4 carbon atoms, with the possibility that when there are several radicals $R^5$, these radicals are identical or different, with the possibility that two groups $OR^5$ may be engaged in the same ring;

- p is an integer equal to 0, 1 or 2, preferably equal to 0 or 1.

**3.** The adhesive composition as claimed in claim 2, **characterized in that** the polymer (A) corresponds to one of the formulae (II), (III) or (IV):

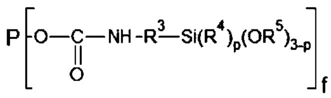

(II)

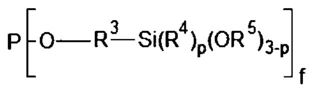

(III)

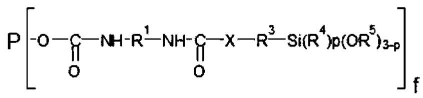

(IV)

in which:

- P represents a saturated or unsaturated, linear or branched polymeric radical optionally comprising one or more heteroatoms, and having a number-average molar mass ranging from 100 g/mol to 48 600 g/mol as measured by size exclusion chromatography using polystyrene standarsd,
- $R^1$ represents a divalent hydrocarbon-based radical comprising from 5 to 15 carbon atoms, which may be aromatic or aliphatic, liear , branched or cyclic,
- $R^3$ represents a linear or branched divalent alkylene radical comprising from 1 to 6 carbon atoms,
- X represents a divalent radical chosen from -NH-, -$NR^7$- or -S-,
- $R^7$ represents a linear or branched alkyl radical comprising from 1 to 20 carbon atoms and which may also comprise one or more heteroatoms, and
- F is an integer ranging from 1 to 6.

**4.** The adhesive composition as claimed in claim 3, **characterized in that** the polymer (A) corresponds to one of the formulae (II'), (III') or (IV'):

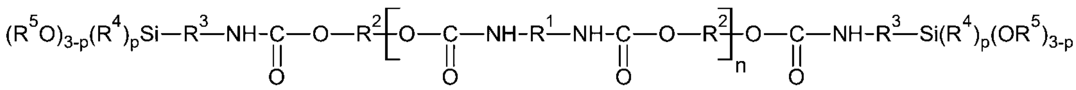

(II')

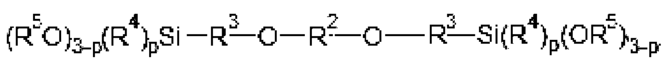

(III')

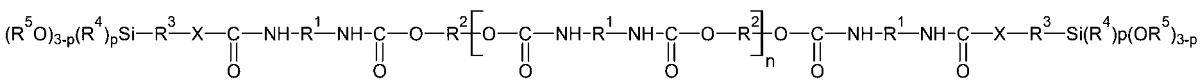

(IV')

in which:

- $R^2$ represents a saturated or unsaturated, linear or branched divalent hydrocarbon-based radical optionally

comprising one or more heteroatoms, and having a number-average molar mass ranging from 100 g/mol to 48 600 g/mol as measured by size exclusion chromatography using polystyrene standards, and
- n is an integer greater than or equal to 0.

**5.** The adhesive composition as claimed in claim 3, **characterized in that** the polymer (A) is a silyl polymer of formula (III') in which $R^2$ is a divalent radical derived from a polyether.

**6.** The adhesive composition as claimed in one of claims 1 to 5, **characterized in that** the resin (B) is chosen from:

- (i) resins obtained by polymerization of terpene hydrocarbons and of phenols, in the presence of Friedel-Crafts catalysts;
- (ii) resins obtained by a process comprising the polymerization of α-methylstyrene, it also being possible for said process to comprise a reaction with phenols;
- (iii) rosins of natural origin or modified rosins (for instance the rosin extracted from pine gum, wood rosin extracted from tree roots and derivatives thereof which are hydrogenated, dimerized, polymerized or esterified with monoalcohols or polyols, such as glycerol or pentaerythritol);
- (iv) resins obtained by hydrogenation, polymerization or copolymerization (with an aromatic hydrocarbon) of mixtures of unsaturated aliphatic hydrocarbons containing approximately 5, 9 or 10 carbon atoms obtained from petroleum fractions;
- (v) terpene resins (generally resulting from the polymerization of terpene hydrocarbons, for instance monoterpene (or pinene), in the presence of Friedel-Crafts catalysts);
- (vi) copolymers based on natural terpenes (for instance styrene/terpene, α-methylstyrene/terpene and vinyltoluene/terpene); or
- (vii) acrylic resins having a viscosity at 100°C of less than 100 Pa.s as measured according to a Brookfield-type method.

**7.** The adhesive composition as claimed in one of claims 1 to 6, **characterized in that** the silsesquioxane resin (C) has the general formula:

$$[RSiO_{3/2}]t$$

in which R, which may be identical or different in nature, represents an organic radical and t is an integer which may range from 6 to 12.

**8.** The adhesive composition as claimed in claim 7, **characterized in that** the silsesquioxane resin (C) corresponds to the general formula (V):

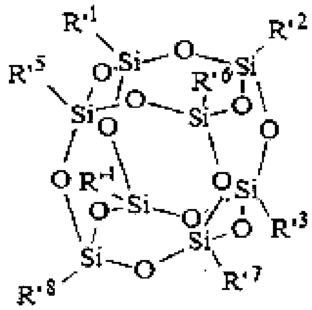

(V)

in which each one from among R'1 to R'8 represents, independently of each other, a group chosen from:

- a hydrogen atom,
- a radical chosen from the group consisting of a linear or branched C1-C4 alkoxy radical, a linear or branched alkyl radical comprising from 1 to 30 carbon atoms, an alkenyl radical comprising from 2 to 30 carbon atoms, an aromatic radical comprising from 6 to 30 carbon atoms, an allyl radical comprising from 3 to 30 carbon atoms, a cyclic aliphatic radical comprising from 3 to 30 carbon atoms and an acyl radical comprising from 1 to 30 carbon

atoms, and
- a group -OSiR'$^{9}$R'$^{10}$ in which R'$^{9}$ and R'$^{10}$ each represents, independently of each other, a hydrogen atom or a radical chosen from the group consisting of linear or branched C1-C4 alkyls, linear or branched C1-C4 alkoxys, C2-C4 alkenyls, a phenyl, a C3-C6 allyl radical, a cyclic C3-C8 aliphatic radical and a C1-C4 acyl radical;

on condition:

- that at least one radical from among the radicals R'$^{1}$ to R'$^{8}$ is a C1-C4 alkoxy radical; and
- that at least one radical from among the radicals R'$^{1}$ to R'$^{8}$ is a phenyl radical.

**9.** The adhesive composition as claimed in one of claims 1 to 8, **characterized in that** it is in the form of a one-component composition comprising:

- from 3% to 90% by weight of the polymer (A);
- from 15% to 80% by weight of the tackifying resin (B);
- from 0.1% to 30% by weight of the silsesquioxane resin (C); and
- from 0.01% to 10% by weight of the crosslinking catalyst (D);

these weight percentages being indicated on the basis of the total weight of one-component composition.

**10.** The adhesive composition as claimed in one of claims 1 to 8, **characterized in that** it is in the form of a multicomponent composition comprising:

- a composition U comprising:
  - the polymer (A); and
  - the tackifying resin (B); and
- a composition V comprising:
  - the crosslinking catalyst (D); and
  - at least one compound (E) chosen from:
    - a compound (E1) with a number-average molecular mass ranging from 300 g/mol to 100 000 g/mol as measured by size exclusion chromatography using polystyrene standards; and
    - a compound (E2) with a vapor pressure at 20°C of greater than or equal to 0.08 kPa;

the silsesquioxane resin (C) being included in composition U or in composition V.

**11.** A self-adhesive article comprising a support layer coated with a self-adhesive layer, **characterized in that** said self-adhesive layer consists of the adhesive composition as defined in one of claims 1 to 10, in the crosslinked state.

**12.** A process for manufacturing the self-adhesive article as defined in claim 11, said process being **characterized in that** it comprises:

- (a) preheating to a temperature of between 40 and 130°C of the heat-crosslinkable adhesive composition, as defined in one of claims 1 to 10;
- (b) application of said composition by coating onto a bearing surface;
- (c) crosslinking of said composition, by heating to a temperature ranging from 50 to 200°C; and then
- (d) laminating or transferring the layer of crosslinked adhesive composition onto a support layer or onto a nonstick protective film.

**13.** The process as claimed in claim 12, **characterized in that** it uses the multicomponent adhesive composition as defined in claim 10 and **in that** step (b) of application by coating onto the bearing surface is performed using a facility for the hot application (20) of said adhesive composition, the facility comprising:

- a nozzle (50) for applying the multicomponent adhesive composition;
- a line (88a) for feeding composition U included in the multicomponent adhesive composition to be applied in fluid

form;
- a line (66a) for feeding composition V included in the multicomponent adhesive composition to be applied in fluid form;
- a line (88) for feeding the nozzle (50) with the multicomponent adhesive composition to be applied in fluid form; and
- a mixer (30) for mixing at least compositions U and V of the multicomponent adhesive composition;

said step (b) comprising:

- supplying the feed line (88a) with at least composition U;
- supplying the feed line (66a) with at least composition V;
- mixing at least composition U and composition V of the multicomponent composition using a mixer (30); and
- hot application of the mixed multicomponent adhesive composition (80) onto a support layer with the aid of the application nozzle (50).

**14.** The process as claimed in claim 13, **characterized in that** the mixer (30) is a dynamic mixer.

**15.** A bonding method using the self-adhesive adhesive article as defined in claim 11, **characterized in that** it comprises the following steps:

a) removing the nonstick protective layer, when such a layer is present;
b) applying the self-adhesive article to one surface of a product; and
c) applying a pressure to said article.

Fig.1

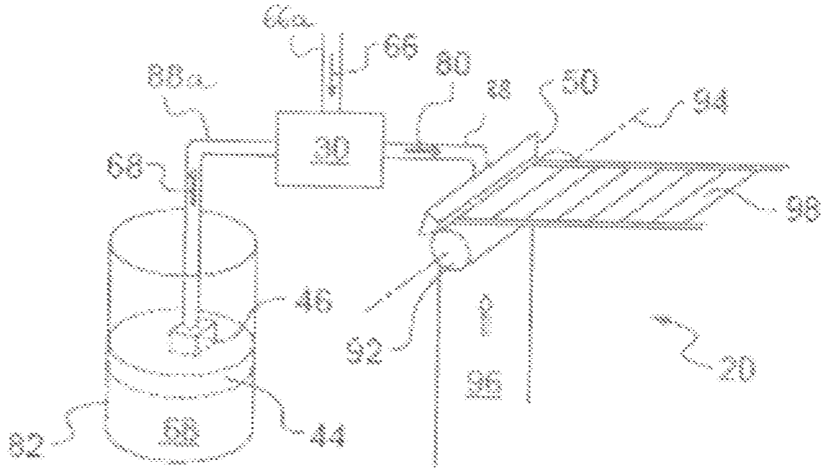

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 09106699 A
- EP 2336208 A
- EP 2468783 A
- WO 2009106699 A
- EP 1829928 A
- EP 2583988 A
- WO 2008107331 A

### Littérature non-brevet citée dans la description

- *CHEMICAL ABSTRACTS*, 68957-04-0
- **W. WAGNER et al.** *International Steam Tables - Properties of Water and Steam based on the Industrial Formulation IAPWS-IF97*
- Manuel Technique FINAT. 2001